# EUROPÄISCHE PATENTSCHRIFT

(11) **EP 2 994 625 B1**
(45) Veröffentlichungstag und Bekanntmachung des Hinweises auf die Patenterteilung: **04.07.2018**
(21) Anmeldenummer: 14722994.2
(22) Anmeldetag: 06.05.2014
(51) Int. Cl.: F01L 13/00, F01L 1/047

(54) **NOCKENWELLE**
CAMSHAFT
ARBRE À CAMES

(30) Priorität: 07.05.2013 DE 102013007741
(43) Veröffentlichungstag der Anmeldung: 16.03.2016
(73) Patentinhaber: ThyssenKrupp Presta TecCenter AG, 9492 Eschen (LI)
(72) Erfinder: MEUSEL, Jürgen, 09573 Dittmansdorf (DE); DIETEL, Uwe, 08115 Lichtentanne (DE); MANN, Bernd, 09405 Zschopau (DE); KUNZ, Michael, 09116 Chemnitz (DE); LEHMANN, Martin, 01855 Mittelndorf (DE)
(74) Vertreter: thyssenkrupp Intellectual Property GmbH
(86) Internationale Anmeldenummer: PCT/EP2014/001201
(87) Internationale Veröffentlichungsnummer: WO 2014/180561

(56) Entgegenhaltungen:
- DE-A1- 19 520 117
- DE-A1-102010 025 099
- DE-A1-102011 108 728
- DE-A1-102011 116 653

## Beschreibung

Die Erfindung betrifft eine Nockenwelle zur Ansteuerung von Zylinderventilen eines Verbrennungsmotors.

Um die Effizienz von Verbrennungsmotoren zu verbessern, ist es bekannt, die Nocken einer Nockenwelle an den Arbeitszustand des Verbrennungsmotors anzupassen. So zeigt zum Beispiel die DE 10 2004 011 586 A1 ein Verschiebenockensystem mit axial verschiebbaren Nockenträgern, so dass durch Verschieben des Nockenträgers auf eine anders geformte Nockenkontur gewechselt werden kann. Vergleichbar hierzu offenbaren auch die DE 10 2010 025 099 A1 und die DE 195 20 117 A1 ein axial auf der Welle verschiebbares Nockenpaket, welches wenigstens zwei Nocken aufweist Hierdurch kann zum Beispiel die Dauer und Stärke der Ventilansteuerung verändert werden. Andererseits ist aus der EP 1 696 107 A1 bekannt, einen Nocken verdrehbar zu gestalten, indem der Nocken verdrehbar auf einer Tragwelle angebracht ist und über einen Stift mit einer Innenwelle verbunden ist, die relativ zur Tragwelle verdreht werden kann. So kann die Winkellage und damit der Schaltzeitpunkt für das Zylinderventil verändert werden.

Aufgabe der vorliegenden Erfindung ist es, eine neuartige Nockenwelle bereitzustellen, mit der sowohl der Schaltzeitpunkt der Zylinderventile variiert werden kann als auch die Dauer und die Stärke der Ventilansteuerung, um eine noch bessere Anpassung an den aktuellen Arbeitszustand des Verbrennungsmotors zu erreichen und so die Effizienz des Verbrennungsmotors zu erhöhen.

Gelöst wird diese Aufgabe durch eine Nockenwelle mit einer als Hohlwelle ausgebildete Tragwelle, in deren Innerem eine Innenwelle konzentrisch zur Tragwelle angeordnet ist. Dabei ist die Innenwelle relativ zur Tragwelle verdrehbar. Weiterhin ist auf der Tragwelle ein erstes Nockensegment mit einer ersten Ausnehmung zur Aufnahme der Tragwelle angeordnet, das bezüglich der Tragwelle drehbar ist und über eine erste Öffnung in der Tragwelle drehfest mit der Innenwelle verbunden ist. Hierbei weist das erste Nockensegment mindestens zwei Nockenkonturen auf. Zudem ist die Verbindung zwischen der Innenwelle und dem ersten Nockensegment derart gestaltet, dass das erste Nockensegment relativ zur Innenwelle und zur Tragwelle axial verschiebbar ist. Dieser Aufbau sorgt dafür, dass gleichzeitig zwischen zwei Nockenkonturen gewechselt werden kann und zudem die Winkellage der Nockenkonturen flexibel eingestellt werden kann.

Erfindungsgemäß weist die Innenwelle hierzu eine Bohrung mit einem Stift auf, der durch die erste Öffnung in der Tragwelle reicht und in eine axiale Nut in der Innenseite der ersten Ausnehmung des ersten Nockensegmentes eingreift. In axialer Richtung ist das erste Nockensegment demnach verschiebbar, wohingegen in Umfangsrichtung ein Formschluss zwischen dem Stift und der Nut vorliegt und so eine Verdrehung des ersten Nockensegmentes relativ zur Innenwelle verhindert. Auf diese Weise kann einerseits eine einfache Kopplung zwischen Innenwelle und dem ersten Nockenelement erreicht werden, während andererseits die Verschiebbarkeit relativ zur Innenwelle und zur Tragwelle gewährleistet ist.

Unter axialer Richtung wird im Sinne dieser Anmeldung eine Richtung verstanden, die parallel zur Drehachse der Nockenwelle verläuft. Die Umfangsrichtung verläuft senkrecht zur Drehachse entlang eines Umfangs der Nockenwelle.

Bei einer weitergebildeten Ausführungsform der Nockenwelle weist die Innenwelle eine durchgehende Bohrung mit einem Stift auf, der durch die erste Öffnung und eine zweite Öffnung in der Tragwelle reicht, wobei die zweite Öffnung der ersten Öffnung gegenüberliegt, und wobei der Stift mit seinen gegenüberliegenden Enden in zwei axiale Nuten in der Innenseite der ersten Ausnehmung des ersten Nockensegmentes eingreift. Diese symmetrische Variante mit zwei gegenüberliegenden Öffnungen und axialen Nuten erlaubt eine höhere Stabilität der Verbindung zwischen Innenwelle und ersten Nockensegment, so dass ein höheres Drehmoment über die Nockenkonturen übertragen werden kann.

Typischerweise ist die Ausdehnung der ersten Öffnung in Umfangsrichtung größer als der Durchmesser des Stiftes. Auf diese Weise wird die Verdrehung der Innenwelle zur Tragwelle nicht durch den Stift komplett behindert. Andererseits kann es bei manchen Varianten vorteilhaft sein, die Ausdehnung der ersten Öffnung in Umfangsrichtung so zu wählen, dass die in Umfangsrichtung gegenüberliegenden Enden der ersten Öffnung als Endanschläge für den Stift wirken, die den Drehwinkel von Innenwelle zu Tragwelle festlegen. Damit wird ein klar definierter Winkelbereich für die Einstellung der Winkelposition vorgegeben. Alternativ kann der Winkelbereich natürlich auch durch die Steuereinheit zur Verdrehung der Innenwelle vorgegeben werden. In diesem Fall verbleibt auch in den Endpositionen ein geringes Spiel in Umfangsrichtung zwischen dem Stift und der ersten Öffnung.

Zur Gewährleistung einer wohldefinierten Verschiebung des ersten Nockensegmentes relativ zur Innenwelle und zu der Tragwelle wird die axiale Nut auf der Innenseite der Ausnehmung bei der Verschiebung über den Stift geführt. Der Stift gleitet dabei entlang der axialen Nut. Bei einigen Ausführungsformen ist die axiale Nut auf der Innenseite der Ausnehmung in Umfangsrichtung dort angeordnet, wo auch das Maximum einer der Nockenkonturen auf der Außenseite liegt. Dies hat den Vorteil, dass die Materialstärke hier höher ist, so dass es einfacher ist eine axiale Nut und trotzdem einen stabilen Nocken bereitzustellen. Prinzipiell muss die axiale Nut allerdings nicht in Umfangsrichtung mit dem Maximum zusammenfallen, sondern kann auch an einer beliebigen anderen Position angeordnet sein.

Bei einer weitergebildeten Ausführungsform ist benachbart zum ersten Nockensegment auf der Tragwelle ein zweites Nockensegment mit einer zweiten Ausnehmung zur Aufnahme der Tragwelle angeordnet, wobei das zweite Nockensegment mindestens zwei Nockenkonturen aufweist und wobei die Verbindung zwischen dem zweiten Nockensegment und der Tragwelle derart gestaltet ist, dass das zweite Nockensegment drehfest und axial verschiebbar auf der Tragwelle angeordnet ist.

Die Anordnung eines zweiten, benachbarten Nockensegmentes ermöglicht es, zwei Ventile des gleichen Zylinders mit der gleichen Nockenwelle zu steuern. Alternativ können auch zwei Ventile zweier benachbarter Zylinder mit einer derartigen Anordnung gesteuert werden. Dadurch, dass das auch das zweite Nockensegment in axialer Richtung verschiebbar auf der Tragwelle angeordnet ist und mindestens zwei Nockenkonturen aufweist, kann mit beiden Nockensegmenten zwischen den jeweiligen Nockenkonturen zur Ansteuerung gewechselt werden. Hierdurch wird eine hohe Flexibilität bei der Ansteuerung der Zylinderventile erreicht.

Typischerweise unterscheiden sich die Nockenkonturen des ersten Nockensegmentes voneinander. Ebenso unterscheiden sich die Nockenkonturen des zweiten Nockensegmentes voneinander. Hierdurch wird eine hohe Variabilität gewährleistet.

Es kann jedoch auch vorteilhaft sein, wenn zwei Nockenkonturen des ersten Nockensegmentes identisch sind oder zwei Nockenkonturen des zweiten Nockensegmentes identisch sind. Zum Beispiel sind bei vielen der folgenden Ausgestaltungen der Nockenwelle das erste und das zweite Nockensegment nur gemeinschaftlich in axialer Richtung verschiebbar.

Insbesondere in solchen Fällen kann es vorteilhaft sein, wenn zwei Nockenkonturen des zweiten Nockensegmentes identisch sind, während die entsprechenden Nockenkonturen des ersten Nockensegmentes sich unterscheiden (oder umgekehrt). So gibt es Anwendungsfälle, bei denen nur mit dem ersten Nockensegment auf eine andere Nockenkontur gewechselt werden soll und die Nockenkontur des zweiten Nockensegmentes beibehalten werden soll. Da die beiden Nockensegmente nur gemeinschaftlich verschiebbar sind, werden in einem solchen Fall auf dem ersten Nockensegment zwei unterschiedliche Nockenkonturen vorgesehen und auf dem zweiten Nockensegment zwei identische Nockenkonturen. Falls die beiden identischen Nockenkonturen benachbart auf dem zweiten Nockensegment angeordnet sind, wird der entsprechende Bereich des zweiten Nockensegmentes vorteilhaft in Form eines breiten Nockens ausgeführt. Das bedeutet, dass sich der Querschnitt des Nockensegmentes zwischen den beiden identischen Nockenkonturen nicht verändert.

Bei einer Variante der Nockenwelle weist die zweite Ausnehmung des zweiten Nockensegmentes und die Außenseite der Tragwelle sich gegenüberliegenden Einbuchtungen auf, so dass sich Hohlräume ergeben, in denen Lagerkörper angeordnet sind. Hierdurch wird die Drehfestigkeit des zweiten Nockensegmentes zur Tragwelle gewährleistet. Gleichzeitig tritt im Gegensatz zu einer Verzahnung kein axialer Bereich der Tragwelle mit einem erhöhten Durchmesser auf. Daher kann die Tragwelle problemlos auch in geschlossene Lageraufnahmen geschoben werden. Um eine axiale Verschiebung des zweiten Nockensegmentes auf der Tragwelle zu ermöglichen, weisen in diesem Fall die Einbuchtungen auf der Innenseite der zweiten Ausnehmung oder die Einbuchtungen auf der Außenseite der Tragwelle in axialer Richtung eine größere Ausdehnung auf als die Lagerkörper. In diesen Einbuchtungen gleiten die Lagerkörper beim Verschieben des zweiten Nockensegmentes ab. Die Drehfestigkeit wird dadurch unterstützt, dass die Einbuchtungen auf der Innenseite der zweiten Ausnehmung und die Einbuchtungen auf der Außenseite der Tragwelle in Umfangsrichtung eine Ausdehnung aufweisen, die im Wesentlichen der Ausdehnung der Lagerkörper in diese Richtung entspricht, um eine Verdrehung des zweiten Nockensegmentes relativ zur Tragwelle zu verhindern.

Bei einer alternativen Variante sind auf der Innenseite der zweiten Ausnehmung und auf der Außenseite der Tragwelle ineinandergreifende Verzahnungen angeordnet. Die Zahnrillen der Verzahnung erstrecken sich dabei in axialer Richtung, so dass eine axiale Verschiebung des zweiten Nockensegmentes auf der Tragwelle ermöglicht und eine Verdrehung des zweiten Nockenelementes relativ zur Tragwelle verhindert wird. Eine Verzahnung lässt sich relativ einfach fertigen und erfordert kein zusätzliches Einlegen von Lagerkörpern. Beispielsweise kann die Verzahnung auf der Außenseite der Tragwelle in Form eines aufgepressten Zahnringes ausgeführt sein.

Bei einer weitergebildeten Ausführungsvariante der erfindungsgemäßen Nockenwelle sind das erste Nockensegment und das zweite Nockensegment benachbart auf der Tragwelle angeordnet. Weiterhin ist zwischen dem ersten Nockensegment und dem zweiten Nockensegment eine Kupplung derart etabliert, dass das erste Nockensegment relativ zum zweiten Nockensegment verdrehbar ist und beide Nockensegmente in axialer Richtung nur gemeinschaftlich verschiebbar sind. Dies hat den Vorteil, dass mit nur einer Steuereinrichtung (zum Beispiel einer Kulissenbahn) beide Nockensegmente in axialer Richtung verschoben werden können.

Eine mögliche Form zur Realisierung einer derartigen Kupplung ist ein Bajonettverschluss zwischen den beiden Nockensegmenten. Dabei weist das erste Nockensegment an der, dem zweiten Nockensegment zugewandten, Stirnseite einen ersten Bund auf, der sich entlang eines Teils des Umfangs erstreckt. Gleichzeitig weist das zweite Nockensegment an der, dem ersten Nockensegment zugewandten, Stirnseite einen zweiten Bund auf, der sich ebenfalls entlang eines Teils des Umfangs erstreckt. Die Kupplung wird dadurch gebildet, dass der erste Bund und der zweite Bund miteinander in Eingriff stehen. Zur Verkupplung der beiden Nockensegmente werden diese zunächst so angeordnet, dass ihre Ausnehmungen miteinander fluchten. Hierbei wird die Winkelorientierung der Nockensegmente zueinander so gewählt, dass der erste Bund des ersten Nockensegmentes in den Bereichen zu liegen kommt, in denen das zweite Nockensegment keinen Bund aufweist. Die Ausdehnung des ersten Bundes in Umfangsrichtung muss also kleiner sein als die Ausdehnung der Bereiche des zweiten Nockensegmentes, in denen kein zweiter Bund angeordnet ist. Umgekehrt gilt das Entsprechende. Die beiden Nockensegmente können dann in axialer Richtung zusammengeschoben werden. Durch eine Verdrehung der beiden Nockensegmente zueinander wird danach ein Formschluss des ersten Bundes mit dem zweiten Bund hergestellt, wobei der erste Bund und der zweite Bund miteinander in Eingriff stehen und auf diese Weise die Kupplung bilden.

Bei einer weiteren Ausführungsform sind das erste Nockensegment und das zweite Nockensegment benachbart auf der Tragwelle angeordnet. Die beiden Nockensegmente haben dabei eine gemeinsame Kontaktfläche, die senkrecht zur Drehachse der Tragwelle verläuft, so dass das erste Nockensegment relativ zum zweiten Nockensegment verdrehbar ist, ohne dass beim Verdrehen eine Verschiebung eines der beiden Nockensegmente verursacht wird. Auf diese Weise sind Verdrehung und Axialverschiebung unabhängig voneinander und können separat durchgeführt werden.

Bei einer Variante der Erfindung ist das erste Nockensegment durch ein Federelement gegen das zweite Nockensegment verspannt. Bei einer alternativen Variante ist das zweite Nockensegment durch ein Federelement gegen das erste Nockensegment verspannt ist. Dies bedeutet, dass das verspannte Nockensegment durch das Federelement durchgängig gegen das jeweils andere Nockensegment gedrückt wird. Bei einer axialen Verschiebung des unverspannten Nockensegmentes folgt das verspannte Nockensegment automatisch der Bewegung des unverspannten Nockensegmentes. Dies hat den Vorteil, dass kein Rastmittel an dem verspannten Nockensegment angeordnet werden muss. Es genügt, das unverspannte Nockensegment mit einem Rastmittel zu fixieren. Das verspannte Nockensegment ist dann ebenfalls in seiner Axialposition durch das Rastmittel des unverspannten Nockensegmentes und durch die Federkraft fixiert. Auf eine Kupplung der beiden Nockensegmente kann daher verzichtet werden.

Eine Ausführungsvariante der erfindungsgemäßen Nockenwelle ist dergestalt, dass das erste Nockensegment und das zweite Nockensegment zusammen mindestens eine erste Kulissenbahn zum Bewegen des ersten Nockensegmentes und des zweiten Nockensegmentes in eine erste axiale Richtung und eine zweite Kulissenbahn zum Bewegen des ersten Nockensegmentes und des zweiten Nockensegmentes in eine zweite axiale Richtung aufweisen. Hierbei ist die zweite axiale Richtung zur ersten axialen Richtung entgegengesetzt.

Kulissenbahnen sind einfach herzustellende Mittel, um die Verschiebung von Elementen auf rotierenden Wellen herbeizuführen. Dabei macht man sich die bereits bestehende Drehbewegung der Welle zu Nutze, indem ein feststehendes Mittel, wie zum Beispiel ein Mitnehmerstift, mit der Kulissenbahn des Elementes in Kontakt gebracht wird. Die Kulissenbahn verläuft dabei zumindest bereichsweise schräg zur Umfangsrichtung (dh. weder entlang der Umfangsrichtung noch entlang der Axialrichtung.). Bei der Drehung der Welle gleitet die Kulissenbahn am Stift entlang. Da der Stift feststehend ist, wird durch die Drehung eine Kraft auf die Kulissenbahn ausgeübt, die Kraftkomponenten in Axialrichtung und in Umfangsrichtung hat. Eine Bewegung der Kulissenbahn in Umfangsrichtung (dh. eine Verdrehung der Kulissenbahn) wird normalerweise ausgeschlossen, indem das Element drehfest auf der Welle angebracht ist. Somit verbleibt eine Kraftkomponente in Axialrichtung, die zu einer Verschiebung der Kulissenbahn und damit zu einer Verschiebung des Elementes führt.

Besonders vorteilhaft ist es, die erste und die zweite Kulissenbahn am zweiten Nockensegment anzuordnen. Hierdurch wird bewirkt, dass das erste Nockensegment schmaler gestaltet werden kann, da kein axialer Bereich für die Kulissenbahn vorgesehen werden muss. Dies bringt wiederum einen Gewichtsvorteil für das erste Nockensegment. Da das erste Nockensegment mittels der Innenwelle verdreht wird, ist es vorteilhaft, wenn dieses Nockensegment besonders leicht ist. Am zweiten Nockensegment schlägt das zusätzliche Gewicht für den Bereich mit den Kulissenbahnen weniger stark zu Buche, da das zweite Nockensegment nur verschoben aber nicht verdreht wird.

Selbstverständlich kann es bei manchen Ausführungsformen trotzdem vorteilhaft sein, beide Kulissenbahnen am ersten Nockensegment anzuordnen.

Insbesondere bei Ausführungsformen ohne Kupplung zwischen dem ersten Nockensegment und dem zweiten Nockensegment kann die gemeinschaftliche Bewegung beider Nockensegmente dadurch realisiert werden, dass das erste Nockensegment eine erste Kulissenbahn zum Bewegen des ersten Nockensegments in eine erste axiale Richtung auf das zweiten Nockensegment hin aufweist und das zweite Nockensegment eine zweite Kulissenbahn zum Bewegen des zweiten Nockensegments in eine zweite axiale Richtung auf das erste Nockensegment hin aufweist.

Kulissenbahnen können auf zwei unterschiedliche Arten ausgebildet sein. Zum einen ist es möglich die Kulissenbahn nutförmig auszubilden. In die nutförmige Kulissenbahn kann dann zum Verschieben des Elementes ein feststehender Stift eingebracht werden.. Die Kulissenbahn verläuft dabei zumindest bereichsweise schräg zur Umfangsrichtung (dh. weder entlang der Umfangsrichtung noch in Axialrichtung). Möglich ist zum Beispiel ein schraubenförmiger Verlauf mit einer konstanten Steigung der Schraubenbahn oder ein schraubenförmiger Verlauf mit variierender Steigung. Weitere komplexe Verläufe sind ebenfalls möglich.

Andererseits kann auch eine Stirnseite des zu verschiebenden Elements zumindest bereichsweise mit einem zur Axialrichtung schrägen Verlauf versehen sein. Da das erste Nockensegment und das zweite Nockensegment bei vielen Varianten benachbart sind, kommt für diese Ausgestaltung der Kulissenbahn nur die, dem jeweils anderen Nockensegment abgewandte, Stirnseite in Frage.

Somit ist es also möglich, sowohl die erste Kulissenbahn als auch die zweite Kulissenbahn nutförmig auszubilden, oder die erste Kulissenbahn und die zweite Kulissenbahn in Form einer zumindest bereichsweise schräg verlaufenden, dem jeweils anderen Nockensegment abgewandten, Stirnseite eines Nockensegments auszubilden. Ebenso sind Mischformen möglich, bei denen eine Kulissenbahn als eine schräg verlaufende Nut geformt ist und die andere Kulissenbahn als eine bereichsweise schräg verlaufende Stirnseite.

Bei Ausführungsformen, bei denen nur das erste Nockensegment verschiebbar ist, können auch beide Stirnseiten des ersten Nockensegmentes mit einem bereichsweise schrägen Verlauf versehen sein. Dies ermöglicht eine besonders schmale Ausführung des ersten Nockensegmentes, wodurch das erste Nockensegment eine geringe Masse aufweist. Hierdurch wird das Verdrehen des ersten Nockensegmentes erleichtert. Zusätzliche hat eine schmale Bauform den Vorteil, dass die Montage erleichtert wird, da hierfür typischerweise nur ein geringer Bauraum zur Verfügung steht.

Bei einigen erfindungsgemäßen Ausführungsformen der Nockenwelle ist jeder Nockenkontur des ersten Nockensegmentes eine zugehörige Nockenkontur des zweiten Nockensegmentes und eine zugehörige gemeinsame Axialposition von erstem Nockensegment und zweiten Nockensegment zugeordnet. Durch diese Zuordnung wird erreicht, dass eine Nockenkontur des ersten Nockensegmentes genau dann aktiv ist, wenn auch die zugeordnete Nockenkontur des zweiten Nockensegmentes aktiv ist. Wobei dies genau dann der Fall ist, wenn die zugehörige gemeinsame Axialposition eingenommen wird. Eine Nockenkontur wird als aktiv bezeichnet, wenn sie sich an der richtigen Axialposition befindet, um bei Betrieb der Nockenwelle ein Zylinderventil anzusteuern. Durch Verschieben des Ensembles aus erstem und zweitem Nockensegment von einer ersten gemeinsamen Axialposition zu einer zweiten gemeinsamen Axialposition kann somit von einem ersten Betriebsmodus in einen zweiten Betriebsmodus gewechselt werden. Im ersten Betriebsmodus sind eine erste Nockenkontur des ersten Nockensegmentes und eine erste Nockenkontur des zweiten Nockensegmentes aktiv. Durch Verschieben an die zweite gemeinsame Axialposition rückt eine zweite Nockenkontur des ersten Nockensegmentes an die ursprüngliche Axialposition der ersten Nockenkontur. Damit ist nun die zweite Nockenkontur aktiv und die erste Nockenkontur des ersten Nockensegmentes inaktiv. Gleichzeitig rückt eine zweite Nockenkontur des zweiten Nockensegmentes an die ursprüngliche Axialposition der ersten Nockenkontur des zweiten Nockensegmentes. Somit ist auch die zweite Nockenkontur des zweiten Nockensegmentes aktiv. Die Nockenwelle befindet sich nun im zweiten Betriebsmodus, in dem die zweite Nockenkontur des ersten Nockensegmentes und die zweite Nockenkontur des zweiten Nockensegmentes aktiv sind.

Vorteilhaft ist es, wenn die Nockenwelle ein Rastmittel umfasst, das das jeweilige Nockensegment an einer der gemeinsamen Axialpositionen verrastet. Dies gewährleistet einen stabilen Arbeitszustand, bei dem keine ungewollten Verschiebungen der Nockensegmente auftreten.

Bei Ausführungsformen mit Kupplung zwischen dem ersten und dem zweiten Nockensegment ist es ausreichend, eines der beiden Nockensegmente mit einem Rastmittel zu fixieren. Über die Kupplung wird dann automatisch auch das andere Nockensegment fixiert.

Bei den Ausführungsvarianten ohne Kupplung ist es dagegen vorteilhaft, sowohl ein Rastmittel zur Verrastung des ersten Nockensegmentes als auch ein Rastmittel zur Verrastung des zweiten Nockensegmentes vorzusehen. Auf diese Weise wird jedes der beiden Nockensegmente unabhängig verrastet.

Eine Möglichkeit zur Ausführung des Rastmittels besteht darin, eine Bohrung in der Innenwelle mit einem federbelastetem und in radialer Richtung beweglich gelagerten Rastkörper vorzusehen. Dabei reicht der Rastkörper durch eine Rastöffnung in der Tragwelle und greift in eine Rastnut in der Innenseite der Ausnehmung des jeweiligen Nockensegmentes ein. Da die Innenwelle innerhalb der Tragwelle drehbar ist, ist es erforderlich, dass die Rastöffnung in der Tragwelle und die Rastnut jeweils eine Ausdehnung in Umfangsrichtung aufweisen, die größer ist als die Ausdehnung des Rastkörpers in Umfangsrichtung. Auf diese Weise wird eine Verdrehung der Innenwelle relativ zur Tragwelle nicht durch den Rastkörper behindert.

Beim Verschieben des Nockensegmentes wird der Rastkörper entgegen der Federkraft in Tragwelle und Innenwelle verschoben bis kein Formschluss in axialer Richtung zwischen Rastkörper und Rastnut mehr vorliegt. Sobald die zweite gemeinsame Axialposition erreicht ist, drückt die Feder den Rastkörper in die entsprechende Rastnut, wodurch das Nockensegment an dieser Axialposition verrastet wird.

Eine mögliche Variante für eine Nockenkontur des ersten oder zweiten Nockensegmentes ist ein Nullhub. Das bedeutet, dass die Nockenkontur so geformt ist, dass keine Ansteuerung des entsprechenden Zylinderventils geschieht. Typischerweise sind in einem solchen Fall sowohl eine Nockenkontur des ersten Nockensegmentes als auch die entsprechende zugeordnete Nockenkontur des zweiten Nockensegmentes als ein Nullhub ausgeführt. Da häufig das erste Nockensegment zur Ansteuerung und das zweite Nockensegment zur Ansteuerung von zweiten Ventilen desselben Zylinders dient, bietet diese Konfiguration den Vorteil, dass der Zylinder abgeschaltet wird, indem keines der beiden Ventile mehr angesteuert wird. Bei einem Vier-Zylinder-Motor kann es zum Beispiel in bestimmten Arbeitszuständen vorteilhaft sein, zwei der Zylinder abzuschalten und den Motor als Zwei-Zylinder-Motor zu betreiben. Ist ein solcher Motor mit einer erfindungsgemäßen Nockenwelle ausgestattet, bei der jedem der vier Zylinder ein Ensemble aus ersten Nockensegment und zweiten Nockensegment zugeordnet ist, können zum Beispiel zwei Zylinder abgeschaltet werden. Gleichzeitig kann die Ansteuerung der verbleibenden Zylinder durch Verdrehung der Innenwelle zur Tragwelle oder durch Wechsel auf eine andere aktive Nockenkontur angepasst werden, um den Wirkungsgrad der beiden aktiven Zylinder zu verbessern. Auf diese Weise kann der Treibstoffverbrauch durch Abschaltung von zwei Zylindern verringert werden.

Näher beschrieben wird die Erfindung anhand der Figuren. Dabei zeigen
Figur 1 einen Längsschnitt einer ersten Ausführungsform der erfindungsgemäßen Nockenwelle;
Figur 2 einen weiteren Längsschnitt der ersten Ausführungsform;
Figur 3 eine dreidimensionale Darstellung mit einem Schnitt durch die erste Ausführungsform;
Figur 4 einen Querschnitt der ersten Ausführungsform;
Figur 5 einen weiteren Querschnitt der ersten Ausführungsform;
Figuren 6 bis 10 verschiedene dreidimensionale Darstellungen der ersten Ausführungsform;
Figur 11 einen Schnitt durch eine schematische Ausführungsform zur Erläuterung einzelner konstruktiver Aspekte;
Figur 12 einen Längsschnitt einer zweiten Ausführungsform der erfindungsgemäßen Nockenwelle;
Figur 13 einen weiteren Längsschnitt der zweiten Ausführungsform;
Figur 14 eine Seitenansicht der zweiten Ausführungsform;
Figur 15 eine dreidimensionale Darstellung der zweiten Ausführungsform;
Die Figuren 16 bis 20 zeigen verschiedene Ausführungsformen in Zusammenhang mit Ventilhubkurven;
Figuren 21 und 22 zeigen eine Ausführungsform mit einem festen zweiten Nockensegment;
Figuren 23 und 24 zeigen eine Variante mit einem Runddrahtring als Rastmittel;
Figuren 25 und 26 zeigen eine Ausführungsform mit einem Federring als Rastmittel.
Figur 27 zeigt einen Längsschnitt einer dritten Ausführungsform

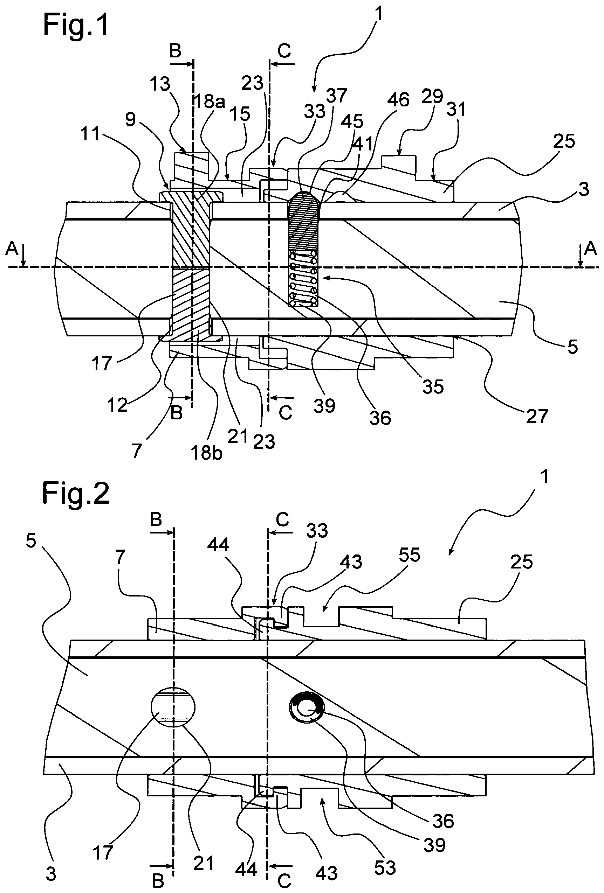

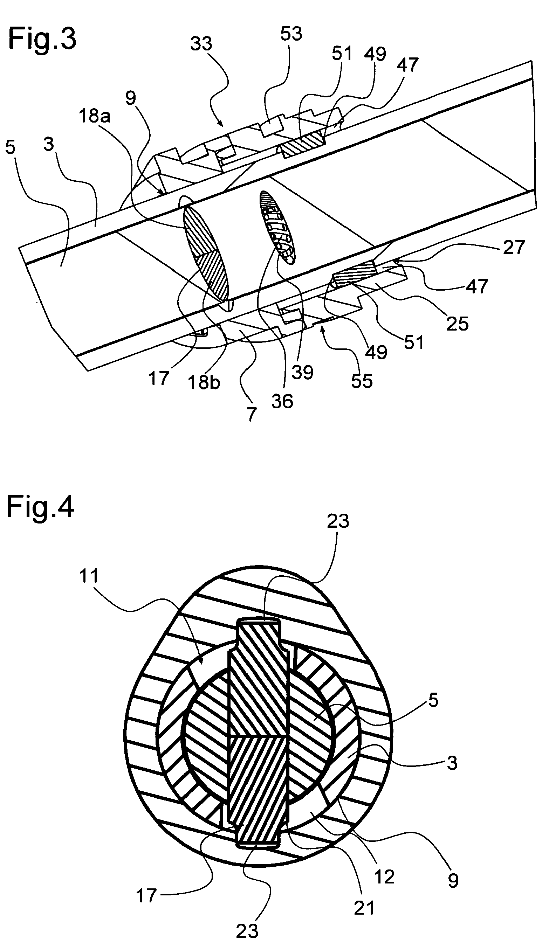

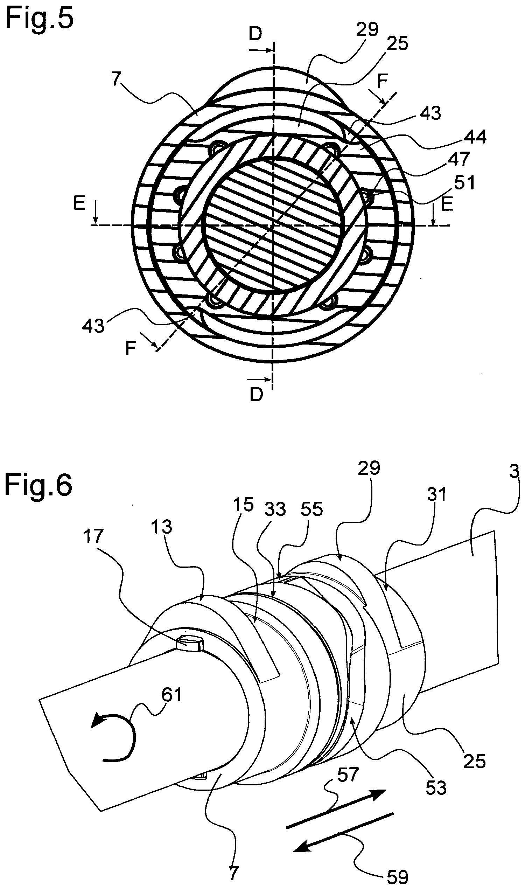

Die in den Figuren 1 bis 3 gezeigten Schnittebenen enthalten jeweils die Drehachse der Nockenwelle, wohingegen die Schnittebenen der Figuren 4 und 5 senkrecht zur Drehachse stehen. Die Figuren 1-10 zeigen eine erste Ausführungsform der erfindungsgemäßen Nockenwelle. Dabei ist in den Figuren 1 bis 3 jeweils ein Schnitt durch die Nockenwelle gezeigt, wobei die Schnittebene in allen drei Fällen die Drehachse der Nockenwelle enthält. In den Figuren 4 und 5 sind zwei Schnitte durch die Nockenwelle gezeigt, die senkrecht zur Drehachse der Nockenwelle verlaufen.

In Figur 1 ist ein Längsschnitt der Nockenwelle 1 dargestellt. Die Nockenwelle 1 umfasst eine Tragwelle 3, die als Hohlwelle ausgebildet ist, und eine Innenwelle 5 die konzentrisch zur Tragwelle 3 angeordnet ist. Dabei ist die Innenwelle 5 relativ zur Tragwelle 3 verdrehbar. Auf der Tragwelle 3 ist ein erstes Nockensegment 7 mit einer ersten Ausnehmung 9 zur Aufnahme der Tragwelle 3 angeordnet. Die Tragwelle 3 weist eine erste Öffnung 11 auf, über die das erste Nockensegment 7 mit der Innenwelle 5 drehfest verbunden ist. Bezüglich der Tragwelle 3 ist das erste Nockensegment 7 dagegen drehbar. Das erste Nockensegment 7 weist eine erste Nockenkontur 13 und eine zweite Nockenkontur 15 auf, die in Axialrichtung zueinander versetzt sind. Bei der in Figur 1 dargestellten Konfiguration der Nockenwelle 1 befindet sich das erste Nockensegment 7 an einer Axialposition, so dass die erste Nockenkontur 13 aktiv ist. Dies bedeutet, dass im eingebauten Zustand der Nockenwelle 1 in einen Verbrennungsmotor mit der Nockenkontur 13 ein Zylinderventil angesteuert wird. Die Nockenkontur 15 hingegen ist nicht aktiv. Das bedeutet, dass sich die Nockenkontur 15 nicht an der richtigen Axialposition befindet, um ein Zylinderventil ansteuern zu können. Erfindungsgemäß ist das erste Nockensegment 7 relativ zur Innenwelle 5 und zur Tragwelle 3 verschiebbar. Das erste Nockensegment 7 kann also nach links (bei dieser Darstellung) verschoben werden, so dass die zweite Nockenkontur 15 an die Axialposition der ersten Nockenkontur 13 rückt. In diesem Fall wäre dann die zweite Nockenkontur 15 aktiv, da sie sich an der richtigen Axialposition befindet, um eine Ansteuerung eines Zylinderventils zu bewirken. Bei der dargestellten Ausführungsform ist die zweite Nockenkontur jedoch als ein Nullhub ausgeführt, so dass selbst wenn die zweite Nockenkontur 15 aktiv ist, keine Zylinderansteuerung erfolgt. Durch das Verschieben des ersten Nockensegmentes 7 wird somit bewirkt, dass das zugeordnete Zylinderventil nicht mehr angesteuert wird. Es erfolgt eine Zylinderabschaltung. Statt einer Zylinderabschaltung kann durch das Verschieben des ersten Nockensegmentes 7 alternativ auch in einen anderen Ansteuermodus gewechselt werden. In einem solchen Fall sind sowohl die erste Nockenkontur 13 als auch die zweite Nockenkontur 15 so ausgeführt, dass sie in der jeweiligen aktiven Stellung das Zylinderventil ansteuern. Die beiden Nockenkonturen 13 und 15 unterscheiden sich dann zum Beispiel in der Hubhöhe, so dass das Zylinderventil je nach Stellung des ersten Nockensegmentes 7 unterschiedlich stark angesteuert wird, oder in der Winkelposition, so dass je nach Stellung des ersten Nockensegments 7 das Zylinderventil zu unterschiedlichen Zeitpunkten angesteuert wird. Es ist auch möglich, dass die Nockenkonturen eine unterschiedliche Breite aufweisen, so dass die Betätigungsdauer des Zylinderventils unterschiedlich ist.

Zusätzlich zum Verschieben des ersten Nockensegments 7 kann das erste Nockensegment 7 auch in seiner Winkelposition zur Tragwelle 3 verändert werden. Hierzu ist das erste Nockensegment 7 verdrehbar auf der Tragwelle 3 angeordnet und über die erste Öffnung 11 mittels des Stiftes 17 drehfest mit der Innenwelle 5 verbunden. Beim Verdrehen der Innenwelle 5 relativ zur Tragwelle 3 wird somit ebenfalls das erste Nockensegment 7 bezüglich der Tragwelle 3 verdreht. Damit der Stift 17 das Verdrehen der Innenwelle 5 zur Tragwelle 3 nicht behindert, ist die erste Öffnung 11 in Umfangsrichtung größer als der Durchmesser des Stiftes 17. Die Innenwelle 5 weist eine Bohrung 21 zur Aufnahme des Stiftes 17 auf. Der Stift 17 reicht durch die Öffnung 11 in der Tragwelle 3 und greift in eine axiale Nut 23 in der Innenseite der ersten Ausnehmung 9 des ersten Nockensegmentes 7. Im vorliegenden Fall ist der Stift 17 zweiteilig und umfasst einen ersten Stiftteil 18a und einen zweiten Stiftteil18b. Eine einteilige Ausführung des Stiftes 17 ist alternativ auch möglich.

Bei der dargestellten Ausführungsform ist die Bohrung 21 als eine durchgehende Bohrung ausgeführt und der Stift 17 reicht durch die erste Öffnung 11 und die zweite Öffnung 12, die der ersten Öffnung 11 gegenüberliegt, wobei der Stift 17 mit seinen gegenüberliegenden Enden in zwei axialen Nuten 23 in den Innenseiten der Ausnehmung 9 des ersten Nockensegmentes 7 eingreift. Statt einer derart symmetrischen Ausführung ist es auch möglich, die Bohrung 21 in Form eines Sackloches auszubilden, so dass nur eine Seite des Stiftes 17 durch eine erste Öffnung 11 in der Tragwelle 3 reicht und in eine axiale Nut 23 eingreift.

Benachbart zum ersten Nockensegment 7 ist auf der Tragwelle 3 ein zweites Nockensegment 25 angeordnet. Das zweite Nockensegment 25 weist eine zweite Ausnehmung 27 zur Aufnahme der Tragwelle 3, eine erste Nockenkontur 29 und eine zweite Nockenkontur 31 auf. Damit hat das zweite Nockensegment 25 die gleiche Anzahl von Nockenkonturen wie das erste Nockensegment 7.

Das zweite Nockensegment 25 ist derart mit der Tragwelle 3 verbunden, dass es einerseits drehfest zur Tragwelle 3 ist, aber andererseits axial verschiebbar auf der Tragwelle 3 angeordnet ist. Ein Beispiel für eine mechanische Ausgestaltung wird mit Bezug auf die Figur 3 erläutert.

Zwischen dem ersten Nockensegment 7 und dem zweiten Nockensegment 25 ist eine Kupplung 33 derart etabliert, dass das erste Nockensegment 7 relativ zum zweiten Nockensegment 25 verdrehbar ist und beide Nockensegmente 7 und 25 in axialer Richtung nur gemeinschaftlich bewegbar sind. Die mechanische Ausgestaltung der Kupplung 33 wird weiter unten im Zusammenhang mit Figur 5 erläutert.

Im vorliegenden Fall ist jeder Nockenkontur des ersten Nockensegmentes 7 eine Nockenkontur des zweiten Nockensegmentes 25 und eine zugehörige gemeinsame Axialposition von erstem Nockensegment 7 und zweiten Nockensegment 25 zugeordnet. Bei dem dargestellten Betriebsmodus der Nockenwelle 1 ist zum Beispiel die erste Nockenkontur 13 des ersten Nockensegmentes 7 aktiv, da sie sich an einer Axialposition befindet, bei der sie im eingebauten Zustand der Nockenwelle ein Zylinderventil ansteuert. Gleichzeitig ist auch die erste Nockenkontur 29 des zweiten Nockensegmentes 25 aktiv. Somit ist eine Zuordnung zwischen der ersten Nockenkontur 13 des ersten Nockensegmentes 7 und der ersten Nockenkontur 29 des zweiten Nockensegmentes 25 gegeben. Bewegt man nun das erste Nockensegment 7 gemeinschaftlich mit dem zweiten Nockensegment 25 in axialer Richtung bis die zweite Nockenkontur 15 des ersten Nockensegmentes 7 die ursprüngliche Axialposition der ersten Nockenkontur 13 einnimmt (dh. nach links), so ist die zweite Nockenkontur 15 des Nockensegmentes 7 aktiv. Entsprechend verschiebt sich auch die zweite Nockenkontur 31 des zweiten Nockensegmentes 25 an die ursprüngliche Position der ersten Nockenkontur 29 des zweiten Nockensegmentes 25, so dass auch die zweite Nockenkontur 31 nun aktiv ist. Es ist also ein zweiter Betriebsmodus eingestellt. Zu jedem dieser Betriebsmodi gehört eine zugehörige gemeinsame Axialposition von erstem Nockensegment 7 und zweiten Nockensegment 25. Im ersten Betriebsmodus (dargestellt) sind die Nockenkonturen 13 und 29 aktiv während sich das erste Nockensegment 7 und das zweite Nockensegment 25 an der gezeigten gemeinsamen Axialposition befinden. Im zweiten Betriebsmodus (nicht dargestellt) befinden sich das erste Nockensegment 7 und das zweite Nockensegment 25 an einer gemeinsamen Axialposition weiter links, so dass die Nockenkonturen 15 und 31 die ursprünglichen Axialpositionen der Nockenkonturen 13 und 29 einnehmen und somit aktiv sind. Um die Einheit aus erstem Nockensegment 7 und zweitem Nockensegment 25 an der entsprechenden gemeinsamen Axialposition zu fixieren, ist ein Rastmittel 35 vorgesehen, das das zweite Nockensegment 25 an einer der gemeinsamen Axialpositionen verrastet. Da das erste Nockensegment 7 mit dem zweiten Nockensegment 25 über die Kupplung 33 verbunden ist, wird somit auch die Axialposition des ersten Nockensegmentes 7 festgelegt. Es wird also eine gemeinsame Axialposition fixiert. Das Rastmittel 35 umfasst eine Bohrung 36 in der Innenwelle 5 mit einem federbelasteten Rastkörper 37. In radialer Richtung ist der Rastkörper 37 beweglich gelagert. Diese radiale Bewegung des Rastköpers 37 erfolgt unter Zusammendrücken der Feder 39. Der federbelastete Rastkörper 37 reicht durch eine Rastöffnung 41 in der Tragwelle 3 und greift in eine Rastnut 45 in der Innenseite der zweiten Ausnehmung 27 des zweiten Nockensegmentes 25 ein. Verschiebt man das erste Nockensegment 7 und das zweite Nockensegment 25 zum zweiten Betriebsmodus hin (dh. nach links), so wird die Feder 39 zunächst zusammengedrückt, um die Verschiebung zu ermöglichen. An der zugeordneten gemeinsamen Axialposition bringt die Feder 39 dann den Rastkörper 37 mit der anderen Rastnut 46 in Eingriff und fixiert so die gemeinsame Axialposition. Sowohl die Rastöffnung 41 als auch die beiden Rastnuten 45 und 46 haben jeweils eine Ausdehnung in Umfangsrichtung, die größer ist als die Ausdehnung des Rastkörpers 37 in Umfangsrichtung, so dass der Rastkörper 37 ein Verdrehung der Innenwelle 5 relativ zur Tragwelle 3 nicht behindert. Die Rastnuten 45 und 46 können auch vollständig umlaufend ausgeführt sein. Dies ermöglicht dann ein einfacheres Herstellungsverfahren. Die Bohrung 36 für den Rastkörper 37 verläuft bei dieser Ausführungsform parallel zur Bohrung 21 für den Stift 17. Dies hat den Vorteil, dass die beiden Bohrungen 21 und 36 vorgenommen werden können, ohne zwischen den Bohrschritten die Innenwelle zu verdrehen. Der Durchmesser der beiden Bohrungen 21 und 36 muss selbstverständlich nicht gleich sein. Prinzipiell ist aber ein beliebiger Winkel zwischen den beiden Bohrungen möglich. Darüber hinaus müssen die beiden Bohrungen 21 und 36 und damit der Stift 17 bzw. die Bewegungsrichtung des Rastkörpers 37 nicht zwangsläufig radial verlaufen. Auch ein schräger Verlauf mit Komponenten in Axialrichtung und Radialrichtung ist möglich.

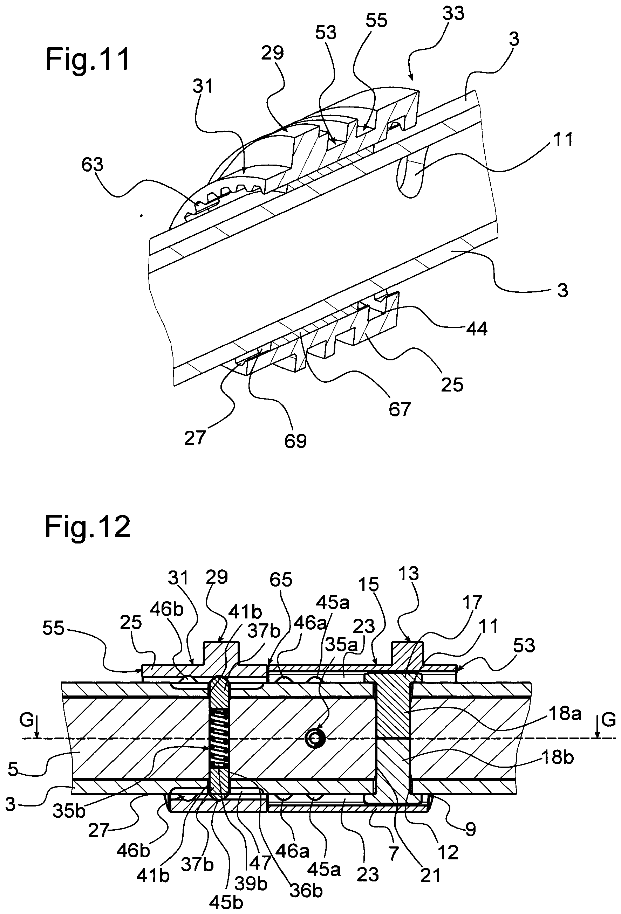

In Figur 2 ist ein Längsschnitt durch die erfindungsgemäße Nockenwelle 1 gezeigt, der senkrecht zum Längsschnitt nach Figur 1 verläuft. Dabei enthält der Längsschnitt die Linie A-A, die in Figur 1 dargestellt ist und mit der Drehachse der Nockenwelle zusammenfällt. Deutlich zu erkennen sind die Bohrungen 21 und 36 in der Innenwelle 5. In der Bohrung 21 ist der Stift 17 aufgenommen und in der Bohrung 36 die Feder 39, die Teil des Rastmittel 35 ist. Auf der Tragwelle 3 sind das erste Nockensegment 7 und das zweite Nockensegment 25 angeordnet. Während das erste Nockensegment 7 drehbar bezüglich der Tragwelle 3 ist, ist das zweite Nockensegment 25 drehfest zur Tragwelle 3. Zwischen dem ersten Nockensegment 7 und dem zweiten Nockensegment 25 ist eine Kupplung 33 derart etabliert, dass das erste Nockensegment 7 relativ zum zweiten Nockensegment 25 verdrehbar ist und beide Nockensegmente 7 und 25 in axialer Richtung nur gemeinschaftlich bewegbar sind. Das erste Nockensegment 7 weist an der, dem zweiten Nockensegment 25 zugewandten, Stirnseite einen ersten Bund 43 auf und das zweite Nockensegment 25 weist an der, dem ersten Nockensegment 7 zugewandten, Stirnseite einen zweiten Bund 44 auf. Der erste Bund 43 und der zweite Bund 44 stehen miteinander in Eingriff und bilden so die Kupplung 33. In der dargestellten Variante umgreift das erste Nockensegment 7 das zweite Nockensegment 25, während das zweite Nockensegment an der Stirnseite dichter an der Tragwelle 5 liegt. Selbstverständlich ist auch der umgekehrte Fall möglich, bei dem das zweite Nockensegment 25 das erste Nockensegment 7 umgreift (vgl. Figur 11).

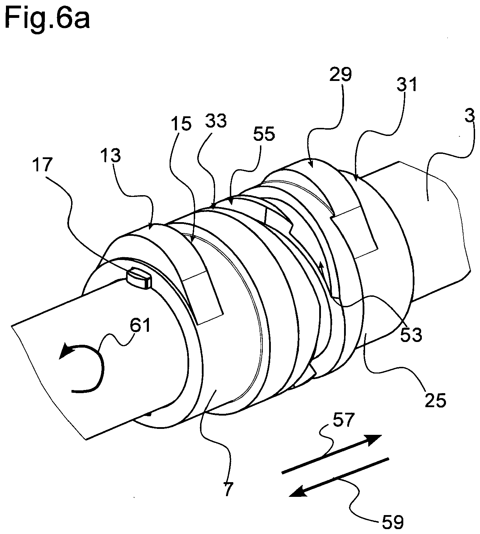

Die gemeinschaftliche Bewegung des ersten Nockensegmentes 7 und des zweiten Nockensegmentes 25 mit Hilfe einer ersten Kulissenbahn 53 und einer zweiten Kulissenbahn 55 bewirkt. Die Funktionsweise der Kulissenbahnen 53 und 55 wird unten mit Bezug auf Figur 6 näher erläutert.

Figur 3 zeigt eine perspektivische Darstellung durch eine aufgeschnittene Nockenwelle 1. Die Schnittebene enthält ebenfalls die Drehachse und steht zu der in Figur 1 dargestellten Schnittebene in einem Winkel von etwa 30°. Der Verlauf der verschiedenen Schnittebenen ist in Figur 5 nochmals erläutert. Neben den bereits erläuterten Komponenten zeigt Figur 3, dass auf der Innenseite der zweiten Ausnehmung 27 des zweiten Nockensegmentes 25 zwei Einbuchtungen 47 angeordnet sind. Gegenüber den Einbuchtungen 47 ist jeweils eine Einbuchtung 49 auf der Außenwelle der Tragwelle angeordnet, so dass sich jeweils Hohlräume ergeben, in denen Lagerkörper 51 angeordnet sind. Während die Einbuchtungen 49 etwa die gleiche Ausdehnung in axialer Richtung haben wie die Lagerkörper 51, haben die Einbuchtungen 47 auf der Innenseite der zweiten Ausnehmung 27 in axialer Richtung eine größere Ausdehnung als die Lagerkörper 51. Im vorliegenden Fall erstrecken sich die Einbuchtungen 47 sogar über die komplette axiale Ausdehnung des zweiten Nockensegmentes 25. Beim Verschieben des zweiten Nockensegmentes 25 auf der Tragwelle 3 gleitet das zweite Nockensegment 25 auf den Lagerkörpern 51 ab. In Umfangsrichtung haben die Einbuchtungen 47 auf der Innenseite der zweiten Ausnehmung 27 und die Einbuchtungen 49 auf der Außenseite der Tragwelle dagegen beide eine Ausdehnung, die im Wesentlichen der Ausdehnung der Lagerkörper 51 in diese Richtung entspricht. Somit verhindern die Lagerkörper 51 durch Formschluss eine Verdrehung des zweiten Nockensegmentes 25 relativ zur Tragwelle 3.

In Figur 4 ist ein Querschnitt durch die Nockenwelle 1 gezeigt, wobei die Schnittebene senkrecht zur Drehachse verläuft und die Linie B-B enthält, die in den Figuren 1 und 2 dargestellt ist. Deutlich zu erkennen ist in Figur 4 die Tragwelle 3, in deren Innerem die Innenwelle 5 verdrehbar angeordnet ist. Die Innenwelle 5 weist eine durchgehende Bohrung 21 mit einem Stift 17 auf. Auf der Tragwelle 3 ist das erste Nockensegment 7 mit einer ersten Ausnehmung 9 zur Aufnahme der Tragwelle 3 angeordnet. In der Tragwelle 3 sind eine erste Öffnung 11 und eine zweite Öffnung 12 angebracht. Über die erste Öffnung 11 und die zweite Öffnung 12 ist das erste Nockensegment 7 drehfest mit der Innenwelle 5 verbunden. Hierzu reicht der Stift 17 durch die erste Öffnung 11 und die zweiten Öffnung 12 und greift mit seinen gegenüberliegenden Enden in zwei axiale Nuten 23 in der Innenseite der ersten Ausnehmung 9 des ersten Nockensegmentes 7. In Umfangsrichtung sind die Ausdehnungen der ersten Öffnung 11 und der zweiten Öffnung 12 größer als der Durchmesser des Stiftes 17.

Figur 5 zeigt einen weiteren Querschnitt durch die Nockenwelle 1, wobei die Schnittebene senkrecht zur Drehachse verläuft und diesmal die Linie C-C enthält, die in den Figuren 1 und 2 dargestellt ist. Der Querschnitt verläuft also durch die Kupplung 33. Um die Beziehung zwischen den Figuren noch stärker zu verdeutlichen zeigt Figur 5 die Linien D-D, E-E und F-F. Die Linie D-D gibt dabei die Lage des Längsschnittes nach Figur 1 an, die Linie E-E die Lage des Längsschnittes nach Figur 2 und die Linie F-F die Lage des Längsschnittes nach Figur 3.

Aus der Figur 5 wird nun auch die Funktionsweise der Kupplung 33 deutlich, die in Form eines Bajonettverschlusses ausgebildet ist. Das erste Nockensegment 7 weist auf der, dem zweiten Nockensegment 25 zugewandten, Stirnseite einen Bund 43 auf. Dieser Bund 43 erstreckt sich nur über einen Teil des Umfangs, was dazu führt, dass der Bund 43 in den Längsschnitten nach Figur 1 und Figur 3 nicht zu sehen ist, sondern nur in Figur 2. Das zweite Nockensegment 25 weist an der, dem ersten Nockensegment 7 zugewandten, Stirnseite einen zweiten Bund 44 auf, der sich ebenfalls nur über einen Teil des Umfangs erstreckt, und deshalb ebenfalls nur im Längsschnitt nach Figur 2 zu sehen ist. Der Querschnitt nach Figur 5 verläuft durch den Bund 44. In den Bereichen des Umfangs des zweiten Nockensegmentes 25, in denen kein Bund angeordnet ist, zeigt Figur 5 einen Teil des dahinterliegenden Bundes 43. Das erste Nockensegment 7 und das zweite Nockensegment 25 werden miteinander verkuppelt, indem beide Nockensegmente zunächst fluchtend zueinander angeordnet werden, wobei die Winkelorientierung so gewählt ist, dass der erste Bund 43 des ersten Nockensegmentes 7 in den Bereichen zu liegen kommt, in denen das zweite Nockensegment 25 keinen Bund aufweist. Die Ausdehnung des ersten Bundes 43 in Umfangsrichtung muss also kleiner sein als die Ausdehnung der Bereiche des zweiten Nockensegmentes 25, in denen kein zweiter Bund angeordnet ist. Umgekehrt gilt das Entsprechende. Die beiden Nockensegmente können dann in axialer Richtung zusammengeschoben werden. Durch eine Verdrehung der beiden Nockensegmente zueinander wird danach ein Formschluss des ersten Bundes 43 mit dem zweiten Bund 44 hergestellt, wobei der erste Bund 43 und der zweite Bund 44 miteinander in Eingriff stehen und auf diese Weise die Kupplung 33 bilden.

Figur 5 zeigt weiterhin die Einbuchtungen 47 auf der Innenseite der zweiten Ausnehmung 27 des zweiten Nockenelementes 25. Da sich die Einbuchtungen 47 über die komplette axiale Ausdehnung des zweiten Nockenelementes erstrecken, sind die Einbuchtungen auch im vorliegenden Schnitt erkennbar. Die korrespondierenden gegenüberliegenden Einbuchtungen 49 in der Außenseite der Tragwelle 3 erstrecken sich allerdings nicht bis zu der in Figur 5 gezeigten Schnittebene und sind daher in Figur 5 nicht sichtbar. In den Einbuchtungen 49 liegend sind die Lagerkörper 51 dargestellt. Im vorliegenden Fall erstrecken sich die Einbuchtungen 47 sogar über die komplette axiale Ausdehnung des zweiten Nockensegmentes 25. Über den Umfang verteilt sind acht Lagerkörper 51 in entsprechenden Hohlräumen, gebildet durch Einbuchtungen 47 und 49, angeordnet. Auf der Linie D-D sind keine Einbuchtungen und Lagerkörper angeordnet. Wie Figur 1 zeigt, ist in dieser Schnittebene das Rastmittel 35 angeordnet, so dass kein Bauraum mehr für die Einbuchtungen zur Verfügung steht. Selbstverständlich können das Rastmittel und die Lagerkörper auch in axialer Richtung versetzt gegeneinander angeordnet sein, so dass Rastmittel und Lagerkörper auch im gleichen Längsschnitt vorgesehen werden können.

In Figur 6 ist die erfindungsgemäße Nockenwelle 1 in einer dreidimensionalen Darstellung gezeigt. Auf der Tragwelle 3 ist das erste Nockensegment 7 angeordnet, das bezüglich der Tragwelle 3 drehbar ist und mit Hilfe des Stiftes 17 drehfest mit der Innenwelle verbunden ist. Das erste Nockensegment 7 weist eine erste Nockenkontur 13 auf und eine zweite Nockenkontur 15, wobei die zweite Nockenkontur 15 als ein Nullhub ausgeführt ist. Bei dem dargestellten Betriebsmodus der Nockenwelle 1 ist die erste Nockenkontur 13 des ersten Nockensegmentes 7 aktiv, da sie sich an einer Axialposition befindet, bei der sie im eingebauten Zustand der Nockenwelle 1 ein Zylinderventil ansteuert. Benachbart zum ersten Nockensegment 7 ist auf der Tragwelle 3 das zweite Nockensegment 25 angeordnet. Zwischen den beiden Nockensegmenten ist eine Kupplung 33 derart etabliert, dass das erste Nockensegment 7 relativ zum zweiten Nockensegment 25 verdrehbar ist und beide Nockensegmente 7 und 25 in axialer Richtung nur gemeinschaftlich bewegbar sind. Das zweite Nockensegment 25 weist ebenfalls eine erste Nockenkontur 29 und eine zweite Nockenkontur 31 auf. Auch hier ist die erste Nockenkontur 29 aktiv. Zwischen der Kupplung 33 und der ersten Nockenkontur 29 sind am zweiten Nockensegment 25 eine erste Kulissenbahn 53 und eine zweite Kulissenbahn 55 angeordnet. Die erste Kulissenbahn 53 dient dazu, das erste Nockensegment 7 und das zweite Nockensegment 25 in eine erste axiale Richtung 57 zu bewegen, und die zweite Kulissenbahn dient dazu, das erste Nockensegment 7 und das zweite Nockensegment 25 in eine zweite axiale Richtung 59 zu bewegen. Die Drehrichtung der Nockenwelle 1 ist in Figur 6 mit 61 bezeichnet. Die Nockenkontur 13 bewegt sich bei Drehung der Nockenwelle 1 also vom Betrachter weg. Führt man bei dieser Drehrichtung einen feststehenden Stift im oberen Bereich in die erste Kulissenbahn 53 ein, so führt der schräge Verlauf der ersten Kulissenbahn 53, dazu dass das zweite Nockensegment während einer halben Umdrehung der Nockenwelle 1 in die erste axiale Richtung 57 bewegt wird. Die zweite Kulissenbahn 55 besitzt ebenfalls einen schrägen Verlauf, wobei die Kulissenbahn jedoch einen entgegensetzten Winkel zur Umfangsrichtung aufweist. Bringt man den gleichen feststehenden Stift in die zweite Kulissenbahn 55 des (nun in erste axiale Richtung 57 verschobenen) zweiten Nockensegments 25 ein, so wird das zweite Nockensegment 25 während einer halben Umdrehung der Nockenwelle 1 in die zweite axiale Richtung 59 bewegt. Prinzipiell können die Verläufe der ersten und zweiten Kulissenbahn 53 und 55 so gewählt werden, dass die Bewegung des zweiten Nockensegmentes 25 während eines beliebigen Bruchteils einer Umdrehung erfolgt. Der Wechsel zwischen zwei Betriebsmodi sollte zwischen zwei aufeinanderfolgenden Ansteuerungen eines Zylinderventils erfolgen. Daher sollte die Bewegung des zweiten Nockensegmentes 25 spätestens nach einer Umdrehung abgeschlossen sein. Die erfindungsgemäße Ausführung mit einer ersten Kulissenbahn 53 und einer zweiten Kulissenbahn 55, die jeweils eine Bewegung während einer halben Umdrehung bewirken, hat den Vorteil, dass die beiden Kulissenbahnen an der gleichen Axialposition auf gegenüberliegenden Seiten der Nockenwelle 1 angeordnet werden können. Dies ermöglicht eine sehr kompakte Bauform des zweiten Nockensegmentes 25. Bei größeren Bruchteilen einer Umdrehung ist dies nicht möglich, da die Kulissenbahnen sich dann schneiden würden. In dem Fall müssten die Kulissenbahnen in Axialrichtung versetzt zueinander angeordnet werden. Andererseits haben kleinere Bruchteile einer Umdrehung den Nachteil, dass die Ansteuerung des feststehenden Stiftes präziser erfolgen müsste je kleiner der Bruchteil ist. Die Bewegung während einer halben Umdrehung bildet somit einen guten Kompromiss.

Da das erste Nockensegment 7 und das zweite Nockensegment 25 aufgrund der Kupplung 33 nur gemeinschaftlich in axialer Richtung bewegbar sind, ist es unerheblich, ob die erste Kulissenbahn 53 und die zweite Kulissenbahn 55 am ersten Nockensegment 7 oder am Nockensegment 25 angeordnet sind. Die gezeigte Anordnung am zweiten Nockensegment 25 hat den Vorteil, dass das erste Nockensegment 7 schmaler gestaltet werden kann, da kein axialer Bereich für die Kulissenbahn vorgesehen werden muss. Dies bringt wiederum einen Gewichtsvorteil für das erste Nockensegment 7, der die Verdrehung des ersten Nockensegmentes 7 erleichtert.

Figur 6a zeigt eine Variante der erfindungsgemäßen Nockenwelle 1. Die dargestellte Variante der Nockenwelle 1 unterscheidet sich von Figur 6 lediglich in der Ausgestaltung der Kulissenbahnen 53 und 55. Die Kulissenbahnen 53 und 55 bewirken jeweils eine Bewegung während einer ganzen Umdrehung. Um eine kompakte Bauweise zu realisieren, sind die beiden Kulissenbahnen bei dieser Variante überschneidend ausgeführt. Die Kulissenbahnen können dabei zum Beispiel wie in der DE102007051739A1 oder der DE102010033087A1 beschrieben realisiert werden.

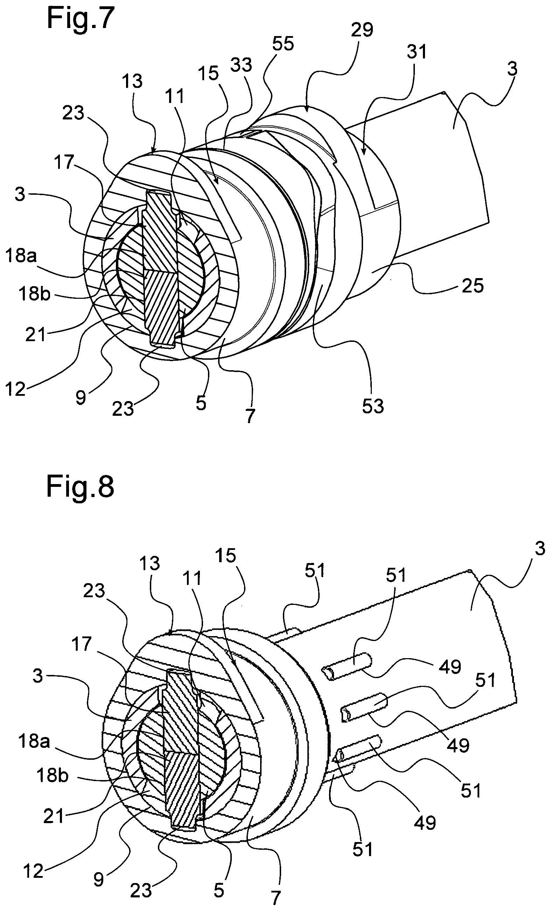

Figur 7 zeigt eine weitere dreidimensionale Darstellung der erfindungsgemäßen Nockenwelle 1. Im Gegensatz zu Figur 6 ist bei dieser Darstellung die Nockenwelle 1 senkrecht zur Drehachse aufgeschnitten. Die Schnittebene verläuft dabei durch die erste Nockenkontur 13. Deutlich zu erkennen ist bei dieser Darstellung die Innenwelle 5 mit der Bohrung 21. In der Bohrung 21 ist der Stift 17 mit dem ersten Stiftteil 18a und dem zweiten Stiftteil 18b angeordnet. Der Stift 17 reicht durch eine erste Öffnung 11 und eine zweite Öffnung 12 in der Tragwelle 3, wobei die zweite Öffnung 12 der ersten Öffnung 11 gegenüberliegt. Mit seinen gegenüberliegenden Enden greift der Stift 17 in zwei axiale Nuten 23 in der Innenseite der ersten Ausnehmung 9 des ersten Nockensegmentes 7 ein.

Figur 8 zeigt eine zur Figur 7 ähnliche Darstellung der Nockenwelle 1. Bei dieser Darstellung ist das zweite Nockensegment 25 entfernt worden, so dass der Blick auf die Lagerkörper 51 in den Einbuchtungen 49 freigegeben ist.

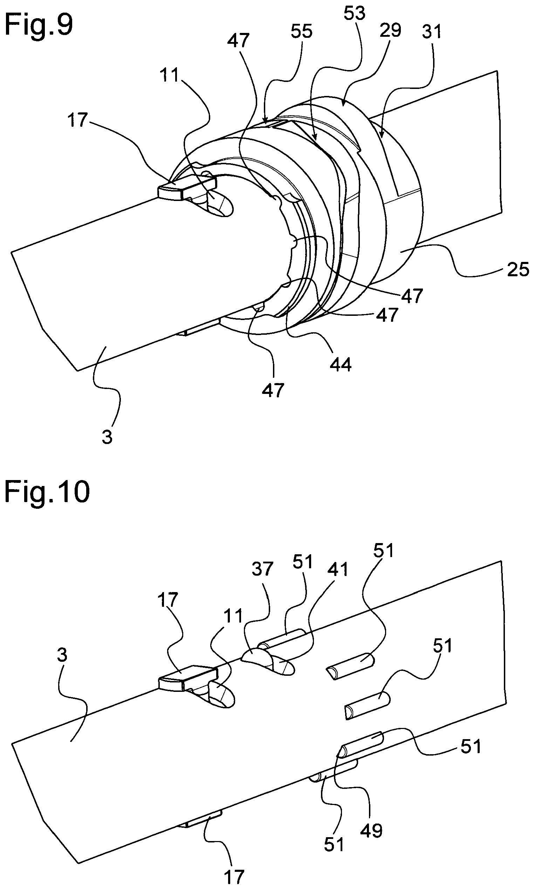

Figur 9 zeigt eine zur Figur 6 ähnliche Darstellung der Nockenwelle 1. Bei dieser Darstellung ist das erste Nockensegment 7 entfernt worden, so dass der Blick auf ein Ende des Stiftes 17, das durch die erste Öffnung 11 reicht, freigegeben ist. Weiterhin ist nun deutlich der zweite Bund 44 des zweiten Nockensegmentes 25 erkennbar. Der zweite Bund 44 erstreckt sich nur über einen Teil des Umfangs und bildet so den einen Teil eines Bajonettverschlusses. Darüber hinaus sind die Einbuchtungen 47 zu erkennen, die sich über komplette axiale Ausdehnung des zweiten Nockensegmentes 25 erstrecken. In diesen Einbuchtungen gleiten die Lagerkörper 51 (siehe Figur 8) beim Verschieben des zweiten Nockensegmentes 25 ab.

In Figur 10 ist eine weitere dreidimensionale Darstellung der Nockenwelle 1 gezeigt, wobei nun das erste und das zweite Nockenelement entfernt wurden, um den Blick auf den Rastkörper 37 zu ermöglichen. Der Rastkörper 37 reicht durch eine Rastöffnung 41 in der Tragwelle 3. In Umfangsrichtung hat die Rastöffnung 41 eine Ausdehnung, die größer ist als die Ausdehnung des Rastkörpers 37 in Umfangsrichtung, so dass der Rastkörper 37 eine Verdrehung der Innenwelle 5 relativ zur Tragwelle 3 nicht behindert. Entsprechendes gilt für den Stift 17 und die Öffnung 11.

Figur 11 zeigt beispielhaft Konstruktionsvarianten, die bei der beschriebenen Nockenwelle zum Einsatz kommen können. Gezeigt ist ein Schnitt durch eine Tragwelle 3, die ein zweites Nockensegment 25 aufweist. Statt der Einbuchtungen mit Lagerkörpern ist bei dieser Variante eine Verzahnung 63 auf der Innenseite der zweiten Ausnehmung 27 angeordnet. Weiterhin weist die Außenseite der Tragwelle 3 eine Verzahnung 69 auf, wobei die beiden Verzahnungen 63 und 69 ineinandergreifen. Die Zahnrillen beider Verzahnungen erstrecken sich in axialer Richtung, so dass eine axiale Verschiebung des zweiten Nockensegmentes 25 auf der Tragwelle 3 ermöglicht wird und eine Verdrehung des zweiten Nockenelementes 25 relativ zur Tragwelle 3 verhindert wird. Die Verzahnung 69 kann einstückig mit der Tragwelle 3 ausgebildet sein oder wie gezeigt in Form eines aufgepressten Zahnringes 67 ausgeführt sein.

Neben der Verzahnung zeigt Figur 11 auch eine Variante der Kupplung 33. Bei dieser Variante ist der Bund 44 so ausgeführt, dass er einen Bund des ersten Nockensegments umgreifen kann.

Es sei angemerkt, dass die Kulissenbahnen 53 und 55 in Figur 11 keinen korrekten schrägen Verlauf haben, der zu einer Bewegung des zweiten Nockenelementes 25 führt. Figur 11 dient nur zur Verdeutlichung der beiden beschriebenen Konstruktionsvarianten, daher ist auf vollständig korrekte Darstellung verzichtet worden. Selbstverständlich können ohne weiteres die mit Bezug auf die anderen Figuren beschriebenen Kulissenbahnen mit diesen Varianten kombiniert werden.

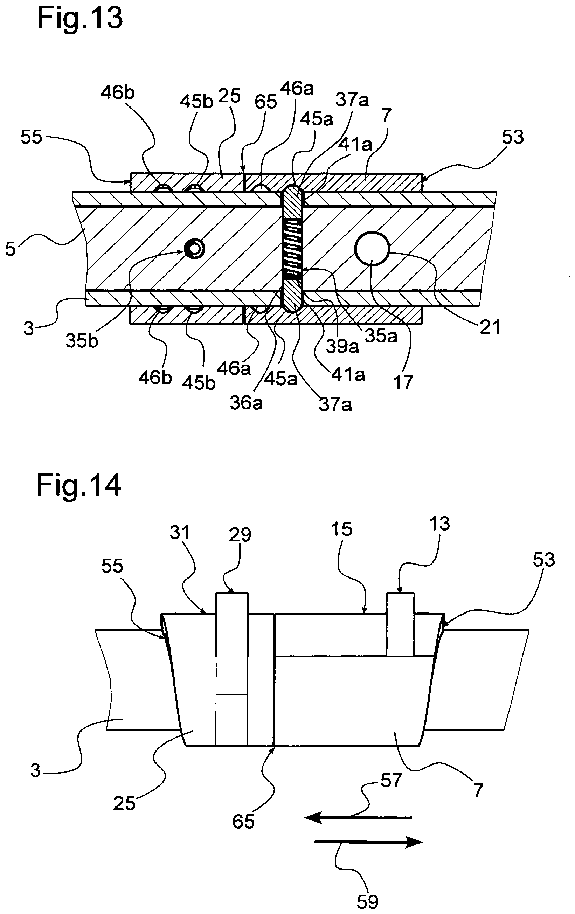

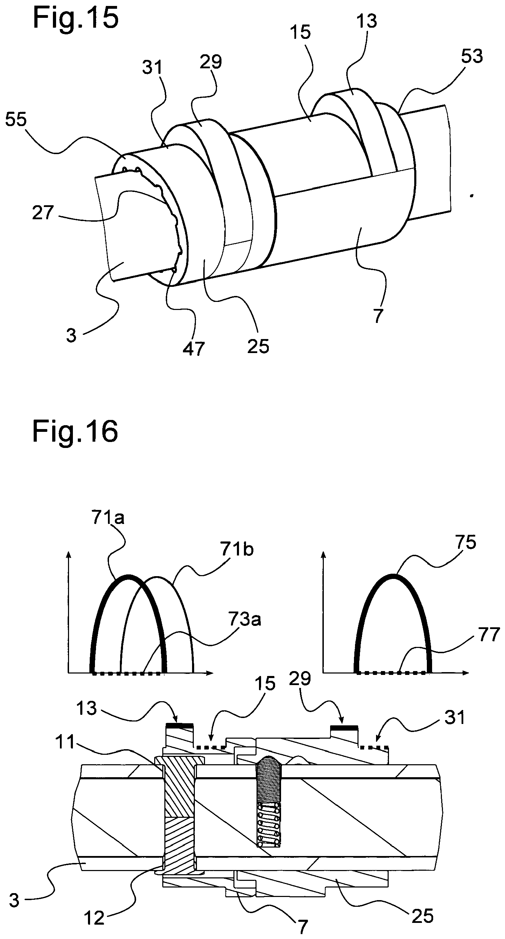

Die Figuren 12-15 zeigen eine zweite Ausführungsform der erfindungsgemäßen Nockenwelle. Dabei ist in den Figuren 12 und 13 jeweils ein Schnitt durch die Nockenwelle gezeigt, wobei die Schnittebene in beiden Fällen die Drehachse der Nockenwelle enthält. Figur 14 zeigt eine seitliche Aufsicht auf die Nockenwelle. Die Figur 15 zeigt eine dreidimensionale Darstellung der zweiten Ausführungsform der erfindungsgemäßen Nockenwelle.

In Figur 12 ist ein Längsschnitt einer Nockenwelle 1 gemäß einer zweiten Ausführungsvariante in zu Figur 1 ähnlicher Darstellung gezeigt. Die Nockenwelle 1 umfasst eine Tragwelle 3, die als Hohlwelle ausgebildet ist, und eine Innenwelle 5 die konzentrisch zur Tragwelle 3 angeordnet ist. Dabei ist die Innenwelle 5 relativ zur Tragwelle 3 verdrehbar. Auf der Tragwelle 3 ist ein erstes Nockensegment 7 mit einer ersten Ausnehmung 9 zur Aufnahme der Tragwelle 3 angeordnet. Die Tragwelle 3 weist eine erste Öffnung 11 auf, über die das erste Nockensegment 7 mit der Innenwelle 5 drehfest verbunden ist. Bezüglich der Tragwelle 3 ist das erste Nockensegment 7 dagegen drehbar. Das erste Nockensegment 7 weist eine erste Nockenkontur 13 und eine zweite Nockenkontur 15 auf, die in Axialrichtung zueinander versetzt sind. Bei der in Figur 12 dargestellten Konfiguration der Nockenwelle 1 befindet sich das erste Nockensegment 7 an einer Axialposition, so dass die erste Nockenkontur 13 aktiv ist. Die Nockenkontur 15 hingegen ist nicht aktiv. Erfindungsgemäß ist das erste Nockensegment 7 relativ zur Innenwelle 5 und zur Tragwelle 3 verschiebbar. Das erste Nockensegment 7 kann also nach rechts (bei dieser Darstellung) verschoben werden, so dass die zweiten Nockenkontur 15 an die Axialposition der ersten Nockenkontur 13 rückt. In diesem Fall wäre dann die zweite Nockenkontur 15 aktiv, da sie sich an der richtigen Axialposition befindet, um eine Ansteuerung eines Zylinderventils zu bewirken. Bei der dargestellten Ausführungsform ist die zweite Nockenkontur jedoch als ein Nullhub ausgeführt, so dass selbst wenn die zweite Nockenkontur 15 aktiv ist, keine Zylinderventilansteuerung erfolgt. Wie bereits in Bezug auf Figur 1 erläutert, ist die Ausführung als Nullhub nicht zwingend. Die beiden Nockenkonturen 13 und 15 können sich zum Beispiel auch in der Hubhöhe, der Winkelposition oder Breite der Nockenkontur in Umfangsrichtung unterscheiden. Alternativ können die beiden Nockenkonturen 13 und 15 auch identisch sein.

Zusätzlich zum Verschieben des ersten Nockensegments 7 kann das erste Nockensegment 7 auch in seiner Winkelposition zur Tragwelle 3 verändert werden. Hierzu ist das erste Nockensegment 7 verdrehbar auf der Tragwelle 3 angeordnet und über die erste Öffnung 11 mittels des Stiftes 17 drehfest mit der Innenwelle 5 verbunden. Beim Verdrehen der Innenwelle 5 relativ zur Tragwelle 3 wird somit ebenfalls das erste Nockensegment 7 bezüglich der Tragwelle 3 verdreht. Damit der Stift 17 das Verdrehen der Innenwelle 5 zur Tragwelle 3 nicht behindert, ist die erste Öffnung 11 in Umfangsrichtung größer als der Durchmesser des Stiftes 17. Die Innenwelle 5 weist eine Bohrung 21 zur Aufnahme des Stiftes 17 auf. Der Stift 17 reicht durch die Öffnung 11 in der Tragwelle 3 und greift in eine axiale Nut 23 in der Innenseite der ersten Ausnehmung 9 des ersten Nockensegmentes 7. Im vorliegenden Fall ist der Stift 17 zweiteilig und umfasst einen ersten Stiftteil 18a und einen zweiten Stiftteil18b. Eine einteilige Ausführung des Stiftes 17 ist alternativ auch möglich.

Bei der dargestellten Ausführungsform ist die Bohrung 21 als eine durchgehende Bohrung ausgeführt und der Stift 17 reicht durch die erste Öffnung 11 und die zweite Öffnung 12, die der ersten Öffnung 11 gegenüberliegt, wobei der Stift 17 mit seinen gegenüberliegenden Enden in zwei axialen Nuten 23 in den Innenseiten der Ausnehmung 9 des ersten Nockensegmentes 7 eingreift. Statt einer derart symmetrischen Ausführung ist es auch möglich, die Bohrung 21 in Form eines Sackloches auszubilden, so dass nur eine Seite des Stiftes 17 durch eine erste Öffnung 11 in der Tragwelle 3 reicht und in eine axiale Nut 23 eingreift.

Benachbart zum ersten Nockensegment 7 ist auf der Tragwelle 3 ein zweites Nockensegment 25 angeordnet. Das zweite Nockensegment 25 weist eine zweite Ausnehmung 27 zur Aufnahme der Tragwelle 3, eine erste Nockenkontur 29 und eine zweite Nockenkontur 31 auf. Damit hat das zweite Nockensegment 25 die gleiche Anzahl von Nockenkonturen wie das erste Nockensegment 7.

Das zweite Nockensegment 25 ist derart mit der Tragwelle 3 verbunden, dass es einerseits drehfest zur Tragwelle 3 ist, aber andererseits axial verschiebbar auf der Tragwelle 3 angeordnet ist. Dies ist analog zur ersten Ausführungsform mit Hilfe von Einbuchtungen und Lagerkörpern realisiert. Alternativ kann auch die mit Bezug auf Figur 11 erläuterte Verzahnung verwendet werden.

Das erste Nockensegment 7 und das zweite Nockensegment 25 weisen eine gemeinsame Kontaktfläche auf 65 auf, die senkrecht zur Drehachse der Tragwelle 3 verläuft, so dass das erste Nockensegment 7 relativ zum zweiten Nockensegment 25 verdrehbar ist, ohne dass beim Verdrehen eine Verschiebung des ersten Nockensegmentes 7 oder des zweiten Nockensegmentes 25 verursacht wird. Im Gegensatz zur ersten Ausführungsform ist zwischen dem ersten Nockensegment 7 und dem zweiten Nockensegment 25 keine Kupplung vorgesehen.

Im vorliegenden Fall ist jeder Nockenkontur des ersten Nockensegmentes 7 eine Nockenkontur des zweiten Nockensegmentes 25 und eine zugehörige gemeinsame Axialposition von erstem Nockensegment 7 und zweiten Nockensegment 25 zugeordnet. Bei der gemeinsamen Axialposition sind die beiden Nockensegmente 7 und 25 auf Anschlag zusammengeschoben, so dass sie sich in der Kontaktfläche 65 berühren.

Um beide Nockensegmente 7 und 25 an der gemeinsamen Axialposition zu fixieren, ist ein Rastmittel 35a vorgesehen, das das erste Nockensegment 7 an einer der gemeinsamen Axialpositionen verrastet. Entsprechend ist ein Rastmittel 35b vorgesehen, das das zweite Nockensegment 25 an der gemeinsamen Axialposition verrastet. Da die beiden Nockensegmente 7 und 25 bei dieser Variante nicht miteinander verkuppelt sind, muss jedes der beiden Nockensegmente 7 und 25 separat verrastet werden.

Beide Rastmittel 35a und 35b umfassen jeweils eine Bohrung 36a und 36b in der Innenwelle 5 mit zwei federbelasteten Rastkörpern 37a und 37b. In radialer Richtung sind die Rastkörper 37a, 37b beweglich gelagert. Diese radiale Bewegung der Rastköpers 37a, 37b erfolgt unter Zusammendrücken der Feder 39a bzw. 39b. Die federbelasteten Rastkörper 37a, 37b reichen jeweils durch zwei Rastöffnungen 41a und 41b in der Tragwelle 3 und greifen in eine Rastnut 45a bzw. 45b in der Innenseite der zweiten Ausnehmung 27 des zweiten Nockensegmentes 25 ein. Verschiebt man das erste Nockensegment 7 und das zweite Nockensegment 25 zum zweiten Betriebsmodus hin (dh. nach rechts), so werden die Federn 39a, 39b zunächst zusammengedrückt, um die Verschiebung zu ermöglichen. An der zugeordneten gemeinsamen Axialposition bringen die Federn 39a und 39b dann die Rastkörper 37a und 37b mit den anderen Rastnuten 46a und 46b in Eingriff und fixieren so die gemeinsame Axialposition. (Die Komponenten des Rastmittel 35a sind teilweise nur in Figur 13 erkennbar)

Sowohl die Rastöffnungen 41a, 41b als auch die vier Rastnuten 45a, 45b, 46a und 46b haben jeweils eine Ausdehnung in Umfangsrichtung , die größer ist als die Ausdehnung der Rastkörpers 37a bzw. 37b in Umfangsrichtung, so dass die Rastkörper 37a, 37b eine Verdrehung der Innenwelle 5 relativ zur Tragwelle 3 nicht behindern. Die Rastnuten 45a, 45b, 46a und 46b sind in diesem Fall vollständig umlaufend ausgeführt.

Dies ermöglicht dann ein einfacheres Herstellungsverfahren. Während die Bohrung 36b parallel zur Bohrung 21 für den Stift 17 verläuft, ist die Bohrung 36a senkrecht dazu (vgl. Figur 13). Allgemein sind beliebige Winkel zwischen den drei Bohrungen möglich. Darüber hinaus müssen die Bohrungen 21, 36a und 36b nicht zwangsläufig radial verlaufen. Auch ein schräger Verlauf mit Komponenten in Axialrichtung und Radialrichtung ist möglich.

An der, dem zweiten Nockensegmentes 25 abgewandten, Stirnseite des ersten Nockensegmentes 7 ist eine erste Kulissenbahn 53 angeordnet. An der, dem ersten Nockensegmentes 7 abgewandten, Stirnseite des zweiten Nockensegmentes 25 ist eine erste Kulissenbahn 55 angeordnet. Die Funktionsweise der Kulissenbahnen 53 und 55 wird unten mit Bezug auf Figur 14 erläutert.

In Figur 13 ist ein Längsschnitt durch die erfindungsgemäße Nockenwelle 1 gezeigt, der senkrecht zum Längsschnitt nach Figur 12 verläuft. Dabei enthält der Längsschnitt die Linie G-G, die in Figur 12 dargestellt ist. Deutlich zu erkennen sind die Bohrungen 17, 36a und 36b in der Innenwelle 5. Der Schnitt zeigt nun auch den Aufbau des Rastmittel 35a, mit dem das erste Nockensegment 7 verrastet wird.

Figur 14 zeigt eine seitliche Aufsicht auf die erfindungsgemäße Nockenwelle. Neben den bereits erläuterten Merkmalen zeigt Figur 14 deutlich eine erste Kulissenbahn 53 und eine zweite Kulissenbahn 55. Mit Hilfe der ersten Kulissenbahn 53 wird das erste Nockensegment 7 in eine erste axiale Richtung 57 auf das zweite Nockensegment 25 hin bewegt. Die erste Kulissenbahn 53 ist in Form einer zumindest bereichsweise schräg zur Umfangsrichtung verlaufenden, dem zweiten Nockensegment abgewandten, Stirnseite des ersten Nockensegmentes 7 ausgebildet. Zum Bewegen des ersten Nockensegmentes 7 wird ein feststehender Stift radial mit der Kulissenbahn 53 in Kontakt gebracht. Dies geschieht in einem Bereich der Kulissenbahn 53, an dem der Abstand der Kulissenbahn zur Kontaktfläche 65 nicht seinen Maximalwert hat. Bei der Drehung der Nockenwelle 1 gleitet die Kulissenbahn 53 am Stift entlang. Da der Stift in axialer Richtung feststehend ist, verschiebt sich die Kulissenbahn 53 und damit das erste Nockensegment 7 in die erste axiale Richtung 57 auf das zweite Nockensegment 25 hin. Über die Kontaktfläche 65 wird somit eine Kraft auf das zweite Nockensegment 25 ausgeübt, so dass auch das zweite Nockensegment 25 in die erste axiale Richtung verschoben wird. Analog kann eine Verschiebung des zweiten Nockensegmentes 25 in die zweite axiale Richtung 59 auf das erste Nockensegment 7 hin bewirkt werden. Hierzu ist die zweite Kulissenbahn 55 in Form einer zumindest bereichsweise schräg verlaufenden, dem ersten Nockensegment abgewandten, Stirnseite des zweiten Nockensegmentes 25 ausgebildet. Bei der Verschiebung des zweiten Nockensegmentes 25 in die zweite axiale Richtung 59 wird gleichsam das erste Nockensegment 7 in die zweite axiale Richtung 59 bewegt.

Da bei dieser Ausführungsform keine Kupplung zwischen dem ersten Nockensegment 7 und dem zweiten Nockensegment 25 vorgesehen ist, wird eine gemeinschaftliche Bewegung beider Nockensegmente 7 und 25 dadurch bewirkt, dass das erste Nockensegment 7 eine erste Kulissenbahn zum Bewegen des ersten Nockensegments in die erste axiale Richtung 57 auf das zweite Nockensegment hin aufweist und das zweite Nockensegment 25 eine zweite Kulissenbahn 55 zum Bewegen des zweiten Nockensegmentes 25 in eine zweite axiale Richtung 59 auf das erste Nockensegment 7 hin aufweist. Im Zusammenspiel mit der gemeinsamen Kontaktfläche 65 der beiden Nockensegmente 7 und 25 wird so die gemeinschaftliche Bewegung realisiert. Die Kulissenbahnen müssen dazu nicht an den Stirnseiten ausgebildet sein. Möglich sind gleichfalls nutenförmige Kulissenbahnen, wie sie bei der ersten Ausführungsform eingesetzt sind.

Die Figur 15 zeigt eine dreidimensionale Darstellung der zweiten Ausführungsform der erfindungsgemäßen Nockenwelle. Aufgrund der dreidimensionalen Ausführungsform sind nun auch die Einbuchtungen 47 auf der Innenseite der zweiten Ausnehmung 27 des zweiten Nockenelements 25 erkennbar. Auch bei dieser Ausführungsform erstrecken sich die Einbuchtungen 47 über die komplette axiale Ausdehnung des zweiten Nockensegmentes 25 und sind daher an der Stirnseite erkennbar.

Figur 16 zeigt die Funktionsweise der Nockenwelle im Zusammenhang mit Ventilhubkurven. Der untere Teil von Figur 16 entspricht Figur 1. Um eine bessere Übersichtlichkeit zu gewährleisten, sind nur ausgewählte Teile mit Bezugsziffern versehen. Weiterhin sind die Nockenkonturen 13, 15, 29 und 31 mit durchgezogenen oder gestrichelten Linien markiert. Im linken oberen Bereich von Figur 16 sind die Ventilhübe dargestellt, die durch das erste Nockensegment bewirkt werden. Auf der horizontale Achse ist der Drehwinkel der Tragwelle aufgetragen und auf der vertikalen Achse der Ventilhub in Längeneinheiten. Im dargestellten ersten Betriebsmodus der Nockenwelle ist die Nockenkontur 13 aktiv und bewirkt die Ventilhubkurve 71a. Diese Ventilhubkurve ist mit der gleichen Linienart dargestellt, mit der auch die zugehörige Nockenkontur markiert ist. Verschiebt man das erste Nockensegment 7 nach links, so dass die zweiten Nockenkontur 15 an die Axialposition der ersten Nockenkontur 13 rückt, so ist die zweite Nockenkontur 15 aktiv und bewirkt die Ventilhubkurve 73a. Auch die Ventilhubkurve 73a ist mit der gleichen Linienart dargestellt, mit der auch die zugehörige Nockenkontur 15 markiert ist. Gleiches gilt entsprechend für alle folgenden Darstellungen.

Da die zweite Nockenkontur 15 als Nullhub ausgeführt ist, liegt die Ventilhubkurve 73a auf der horizontalen Achse. Es wird also kein Ventilhub bewirkt. Zusätzlich zu der Verschiebung ist das erste Nockensegment 7 bezüglich der Tragwelle 3 drehbar. Da auf der horizontalen Achse der Drehwinkel der Tragwelle aufgetragen ist, entspricht eine Verdrehung des ersten Nockensegmentes 7 relativ zur Tragwelle 3 einer horizontalen Verschiebung der Ventilhubkurve. Das erste Nockensegment 7 kann kontinuierlich zwischen zwei extremen Drehstellungen variiert werden. In der ersten extremen Drehstellung wird die Ventilhubkurve 71a bewirkt und in der zweiten extremen Drehstellung die Ventilhubkurve 71b. Der horizontale Abstand zwischen den beiden Ventilhubkurven 71a und 71b beträgt in diesem Fall 30°. Dies ist der maximale Drehwinkel, um den das erste Nockensegment 7 relativ zur Tragwelle verdreht werden kann. Der Zahlenwert hängt von den genauen Anforderungen ab. Typischerweise ist der Zahlenwert ein Kompromiss zwischen einer möglichst hohen Flexibilität mit einem großen maximalen Drehwinkel und einer hohen Stabilität der Tragwelle 3. Je größer der Drehwinkel ist, desto größer müssen auch die Öffnungen 11 und 12 in Umfangsrichtung sein. Dies reduziert die Stabilität der Tragwelle. Maximale Drehwinkel im Bereich von 20°-30° sind üblich.

Im rechten oberen Bereich sind die Ventilhubkurven des zweiten Nockensegmentes 25 analog dargestellt. Zur ersten Nockenkontur 29 gehört die Ventilhubkurve 75 und zur zweiten Nockenkontur 31 des zweiten Nockensegmentes 25 gehört die Ventilhubkurve 77. Auch in diesem Fall ist die zweite Nockenkontur 31 als Nullhub ausgeführt. Somit liegt die Ventilhubkurve 77 auf der horizontalen Achse.

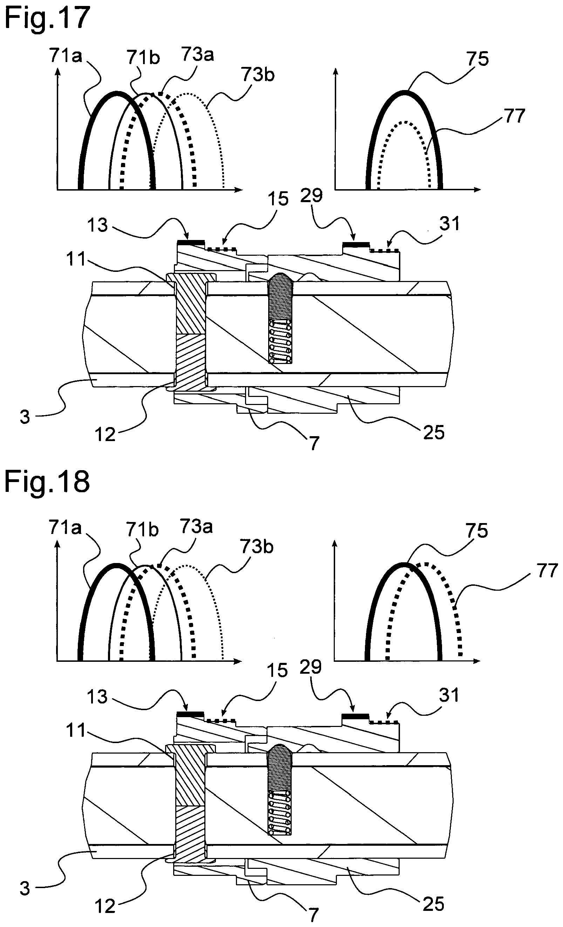

Figur 17 zeigt eine weitere Ausführungsform in analoger Darstellung. Im Gegensatz zu Figur 16 ist die zweite Nockenkontur 15 des ersten Nockensegmentes 7 diesmal nicht als Nullhub ausgeführt. Stattdessen bewirkt zweite Nockenkontur 15 den Ventilhubkurve 73a. Diese hat den gleichen maximalen Ventilhub wie die Ventilhubkurve 71a ist jedoch um ca. 40° im gegenüber der Ventilhubkurve 71a verdreht. Die Ventilhubkurve 73a ist also um 40° gegenüber der Ventilhubkurve 71a nach rechts versetzt. Aufgrund der Verdrehung der beiden Kurven zueinander scheint es im unteren Teil der Figur 17 so, als ob der Ventilhub aufgrund der Nockenkontur 13 größer wäre als bei der Nockenkontur 15. Dies liegt daran, dass der gezeigte Querschnitt das Maximum der Nockenkontur 13 enthält, aber nicht das Maximum der Nockenkontur 15. Zusätzlich kann das erste Nockensegment 7 kontinuierlich zwischen zwei extremen Drehstellungen variiert werden. In der ersten extremen Drehstellung werden die Ventilhubkurven 71a bzw. 73a (je nach Verschiebestellung) bewirkt und in der zweiten extremen Drehstellung die Ventilhubkurven 71b und 73b. Der horizontale Abstand zwischen den beiden Ventilhubkurven beträgt jeweils 30°. Bei der Ansteuerung der Ventile kann somit die steuernde Ventilhubkurve um bis zu 70° variiert werden: Eine kontinuierliche Variation von 30° zwischen den Kurven 71a und 71b durch Verdrehen, ein Sprung um 10° auf die Kurve 73a durch Verschieben und ein weitere kontinuierliche Variation um weitere 30° bis zur Kurve 73b. Der Sprung kann selbstverständlich vermieden werden, indem die Ventilhubkurve 73a einen horizontalen Abstand von der Kurve 71a hat, der kleiner oder gleich dem horizontalen Abstand der Kurven 71a und 71b ist. Im Gegensatz zu bekannten Nockenwellen wird daher erfindungsgemäß ein wesentlich größerer Verstellbereich bereitgestellt.

Im rechten oberen Bereich von Figur 17 sind die die Ventilhubkurven des zweiten Nockensegmentes 25 analog dargestellt. Zur ersten Nockenkontur 29 gehört die Ventilhubkurve 75 und zur zweiten Nockenkontur 31 des zweiten Nockensegmentes 25 gehört die Ventilhubkurve 77. In diesem Fall ist die zweite Nockenkontur 31 so ausgeführt, dass sich eine Ventilhubkurve 77 ergibt, die das Maximum beim gleichen Winkel hat wie die Ventilhubkurve 75. Allerdings ist die Amplitude, das heißt der maximale Ventilhub, bei der Ventilhubkurve 77 um etwa 30% geringer als bei der Ventilhubkurve 75.

Figur 18 zeigt eine weitere Variante der erfindungsgemäßen Nockenwelle. Während das erste Nockensegment 7 identisch aufgebaut ist zur Ausführungsform nach Figur 17, weist das zweite Nockensegment 25 zwei Nockenkonturen 29 und 31 auf, die sich in ihrer Winkellage unterscheiden. Die zugehörigen Ventilhubkurven 75 und 77 haben bei dieser Variante die gleiche Amplitude, sind aber um etwa 20° im Winkel zueinander verdreht.

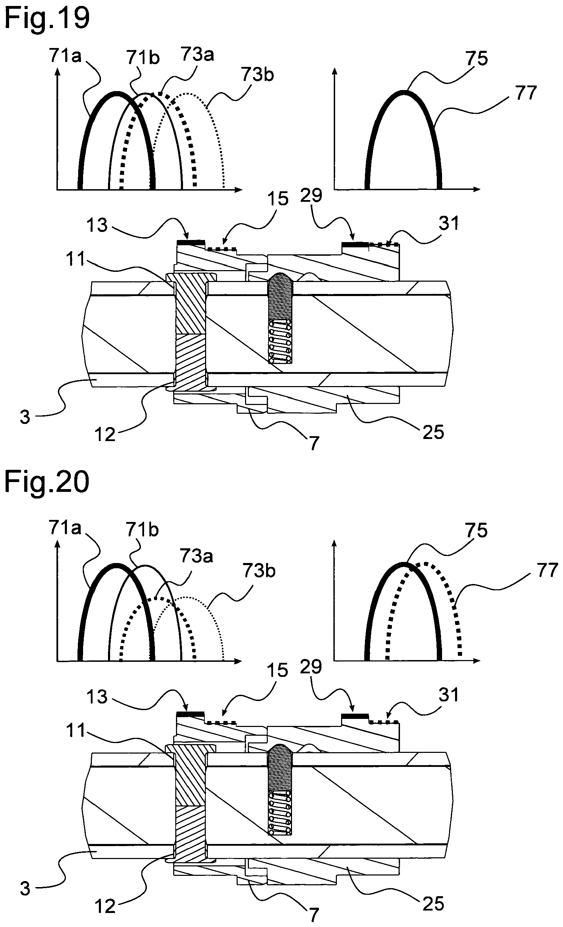

Figur 19 zeigt eine weitere Variante der erfindungsgemäßen Nockenwelle. Bei dieser Variante sind die beiden Nockenkonturen 29 und 31 des zweiten Nockensegmentes 25 identisch. Der Querschnitt des zweiten Nockensegmentes verändert sich daher nicht zwischen den beiden identischen Nockenkonturen 29 und 31. Die beiden Ventilhubkurven 75 und 77 fallen zusammen.

In Figur 20 ist eine Ausführungsvariante gezeigt, die im Wesentlichen der Ausführungsform nach Figur 18 entspricht. Allerdings ist in diesem Fall die Amplitude, das heißt der maximale Ventilhub, der zweiten Nockenkontur 15 des ersten Nockensegmentes 7 um etwa 40% geringer als die Amplitude der ersten Nockenkontur 13.

Beispielhaft zeigen die Figuren 16 bis 20, dass die erfindungsgemäße Nockenwelle verschiedenen Variationsmöglichkeiten für die Einstellung der Ventilhubkurven ermöglicht.

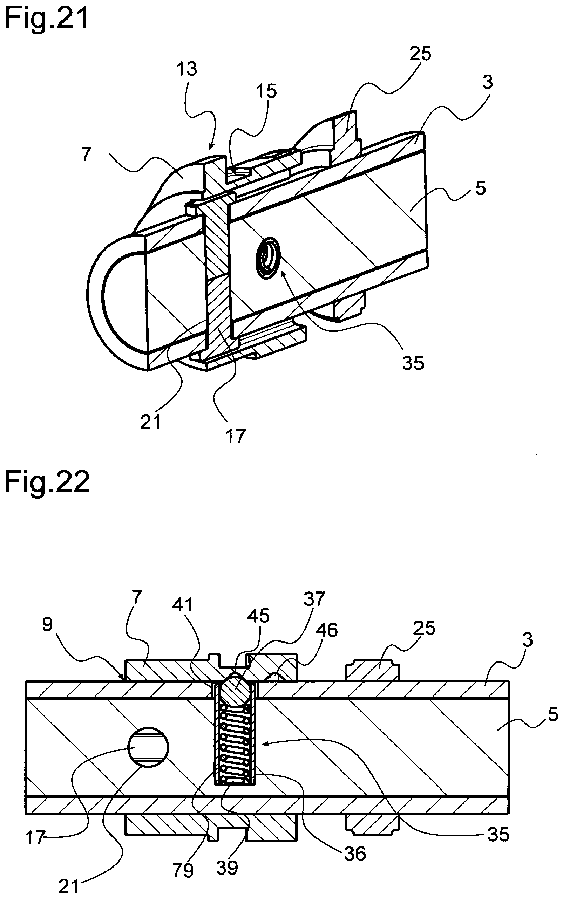

Die Figuren 21 und 22 zeigen eine weitere Ausführungsform der erfindungsgemäßen Nockenwelle. Dabei zeigt Figur 21 eine dreidimensionale Darstellung mit einem Längsschnitt durch die Nockenwelle. Die Schnittebene in Figur 21 liegt analog zur Figur 1. In Figur 22 ist ein hierzu senkrechter Schnitt dargestellt. Die Schnittebene verläuft also analog zu Figur 2. Bei dieser Ausführungsvariante ist das erste Nockensegment 7 bezüglich der Tragwelle 3 drehbar und relativ zur Tragwelle 3 und zur Innenwelle 5 axial verschiebbar. Dagegen ist das zweite Nockensegment 25 fest mit der Tragwelle verbunden. Um das erste Nockensegment 7 an einer Rastposition zu verrasten ist sein Rastmittel 35 vorgesehen. Das Rastmittel 35 umfasst eine Bohrung 36 in Form eines Sackloches. In der Bohrung ist eine Hülse 79 angeordnet, die sich durch die Rastöffnung 41 bis zum Außendurchmesser der Tragwelle 3 erstreckt. In der Hülse ist ein federbelasteter und in radialer Richtung beweglich gelagerter Rastkörper angeordnet. Dieser reicht durch die Rastöffnung 41 in der Tragwelle 3 und greift in die Rastnut 45 in der Innenseite der ersten Ausnehmung 9 des ersten Nockensegmentes 7 ein. Durch die Feder 39 wird der als Kugel ausgebildete Rastkörper 37 in die Rastnut 45 gedrückt, so dass ein Formschluss in axialer Richtung besteht. Bei dieser Variante der Erfindung verläuft die Bohrung 36 für das Rastmittel 35 senkrecht zur Bohrung 21 für den Stift 17. Auch in diesem Fall kann das Rastmittel anstatt eines Sackloches auch eine durchgehende Bohrung umfassen (vgl. Figur 12). Das Rastmittel 35 wäre dann symmetrisch aufgebaut aus zwei Kugeln mit dazwischenliegender Feder in einer Hülse.

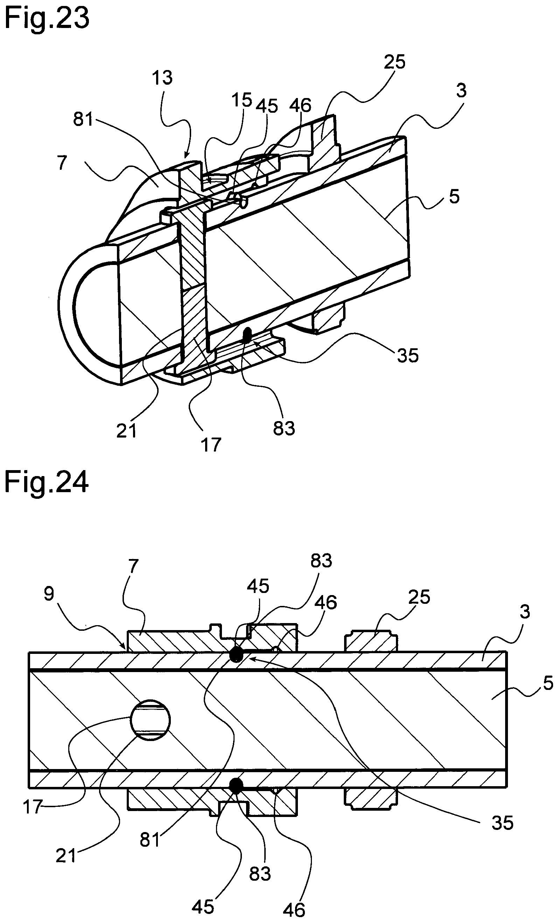

Die Figuren 23 und 24 zeigen eine weitere Ausführungsform der Erfindung. Im Gegensatz zu der in den Figuren 21 und 22 dargestellten Variante kommt hier ein anderes Rastmittel 35 zum Einsatz. Die Tragwelle 3 weist eine umlaufende Nut 81 auf, in die ein Runddrahtring 83 eingelegt ist. Der Runddrahtring 83 greift sowohl in die Nut 81 als auch in die Rastnut 45 ein. Verschiebt man das erste Nockensegment 7, so wird der Runddrahtring 83 elastisch verformt. Sobald die andere Rastnut 46 der Nut 81 gegenüberliegt, verformt sich der Runddrahtring 83 zurück und stellt einen Formschluss in axialer Richtung her. Auf diese Weise wird jeweils eine Verrastung des ersten Nockensegmentes erreicht.

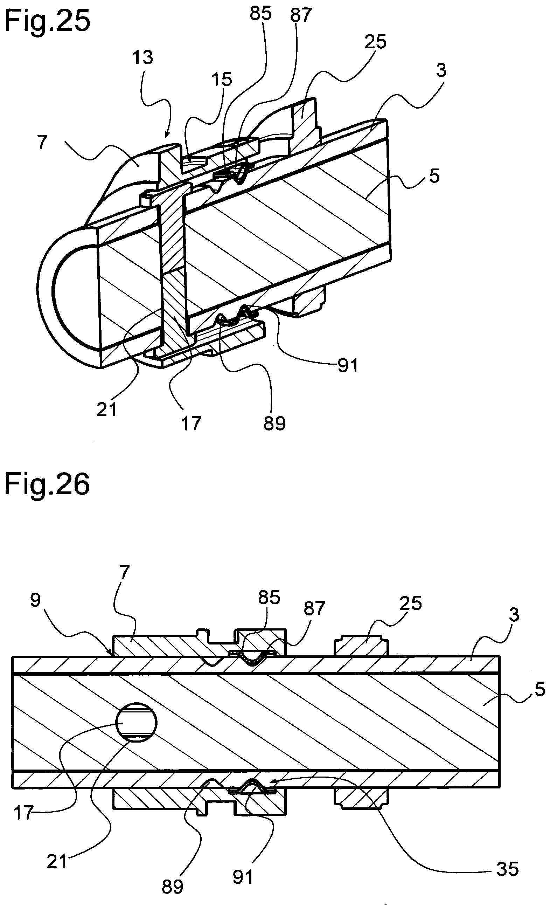

In den Figuren 25 und 26 ist eine weitere Variante der Erfindung mit einem anderen Rastmittel 35 dargestellt. In diesem Fall weist das erste Nockensegment 7 eine umlaufende Nut 85 auf, in die ein Federring 87 eingelegt ist. Der Federring 87 greift in eine Rastnut 89 in der Tragwelle 3 ein. Beim Verschieben des ersten Nockensegmentes 7 wird der Federring elastisch verformt. Sobald der Federring 89 die zweite Rastnut 91 bis zur anderen Rastnut 91 verschoben wurde, verformt er sich zurück und greift in die umlaufende Rastnut 91 der Tragwelle 3 ein. Dies stellt eine stabile Verrastung des ersten Nockensegmentes 7 sicher.

Die verschiedenen beschriebenen Rastmittel können selbstverständlich auch bei den Ausführungsvarianten zum Einsatz kommen, bei denen das erste und das zweite Nockensegment verschiebbar sind.

Weiterhin können die Ausführungsbeispiele auch auf drei oder mehr Nockenkonturen pro Nockensegment erweitert werden, um eine höhere Flexibilität zu erreichen. In einem solchen Fall werden dann entsprechend zusätzliche Rastnuten vorgesehen, um die Nockensegmente an der erforderlichen Axialposition zu verrasten.

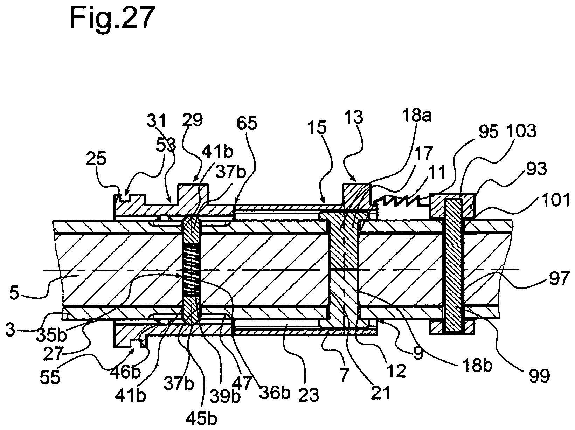

Figur 27 zeigt einen Längsschnitt einer Nockenwelle 1 gemäß einer dritten Ausführungsvariante. Die Nockenwelle 1 umfasst eine Tragwelle 3, die als Hohlwelle ausgebildet ist, und eine Innenwelle 5 die konzentrisch zur Tragwelle 3 angeordnet ist. Dabei ist die Innenwelle 5 relativ zur Tragwelle 3 verdrehbar. Auf der Tragwelle 3 ist ein erstes Nockensegment 7 mit einer ersten Ausnehmung 9 zur Aufnahme der Tragwelle 3 angeordnet. Die Tragwelle 3 weist eine erste Öffnung 11 auf, über die das erste Nockensegment 7 mit der Innenwelle 5 drehfest verbunden ist. Bezüglich der Tragwelle 3 ist das erste Nockensegment 7 dagegen drehbar. Das erste Nockensegment 7 weist eine erste Nockenkontur 13 und eine zweite Nockenkontur 15 auf, die in Axialrichtung zueinander versetzt sind. Bei der in Figur 27 dargestellten Konfiguration der Nockenwelle 1 befindet sich das erste Nockensegment 7 an einer Axialposition, so dass die erste Nockenkontur 13 aktiv ist. Die Nockenkontur 15 hingegen ist nicht aktiv. Erfindungsgemäß ist das erste Nockensegment 7 relativ zur Innenwelle 5 und zur Tragwelle 3 verschiebbar. Das erste Nockensegment 7 kann also nach rechts (bei dieser Darstellung) verschoben werden, so dass die zweiten Nockenkontur 15 an die Axialposition der ersten Nockenkontur 13 rückt. In diesem Fall wäre dann die zweite Nockenkontur 15 aktiv, da sie sich an der richtigen Axialposition befindet, um eine Ansteuerung eines Zylinderventils zu bewirken. Bei der dargestellten Ausführungsform ist die zweite Nockenkontur jedoch als ein Nullhub ausgeführt, so dass selbst wenn die zweite Nockenkontur 15 aktiv ist, keine Zylinderventilansteuerung erfolgt. Wie bereits in Bezug auf Figur 1 erläutert, ist die Ausführung als Nullhub nicht zwingend. Die beiden Nockenkonturen 13 und 15 können sich zum Beispiel auch in der Hubhöhe, der Winkelposition oder Breite der Nockenkontur in Umfangsrichtung unterscheiden. Alternativ können die beiden Nockenkonturen 13 und 15 auch identisch sein.

Zusätzlich zum Verschieben des ersten Nockensegments 7 kann das erste Nockensegment 7 auch in seiner Winkelposition zur Tragwelle 3 verändert werden. Hierzu ist das erste Nockensegment 7 verdrehbar auf der Tragwelle 3 angeordnet und über die erste Öffnung 11 mittels des Stiftes 17 drehfest mit der Innenwelle 5 verbunden. Beim Verdrehen der Innenwelle 5 relativ zur Tragwelle 3 wird somit ebenfalls das erste Nockensegment 7 bezüglich der Tragwelle 3 verdreht. Damit der Stift 17 das Verdrehen der Innenwelle 5 zur Tragwelle 3 nicht behindert, ist die erste Öffnung 11 in Umfangsrichtung größer als der Durchmesser des Stiftes 17. Die Innenwelle 5 weist eine Bohrung 21 zur Aufnahme des Stiftes 17 auf. Der Stift 17 reicht durch die Öffnung 11 in der Tragwelle 3 und greift in eine axiale Nut 23 in der Innenseite der ersten Ausnehmung 9 des ersten Nockensegmentes 7. Im vorliegenden Fall ist der Stift 17 zweiteilig und umfasst einen ersten Stiftteil 18a und einen zweiten Stiftteil18b. Eine einteilige Ausführung des Stiftes 17 ist alternativ auch möglich.

Bei der dargestellten Ausführungsform ist die Bohrung 21 als eine durchgehende Bohrung ausgeführt und der Stift 17 reicht durch die erste Öffnung 11 und die zweite Öffnung 12, die der ersten Öffnung 11 gegenüberliegt, wobei der Stift 17 mit seinen gegenüberliegenden Enden in zwei axialen Nuten 23 in den Innenseiten der Ausnehmung 9 des ersten Nockensegmentes 7 eingreift. Statt einer derart symmetrischen Ausführung ist es auch möglich, die Bohrung 21 in Form eines Sackloches auszubilden, so dass nur eine Seite des Stiftes 17 durch eine erste Öffnung 11 in der Tragwelle 3 reicht und in eine axiale Nut 23 eingreift.

Benachbart zum ersten Nockensegment 7 ist auf der Tragwelle 3 ein zweites Nockensegment 25 angeordnet. Das zweite Nockensegment 25 weist eine zweite Ausnehmung 27 zur Aufnahme der Tragwelle 3, eine erste Nockenkontur 29 und eine zweite Nockenkontur 31 auf. Damit hat das zweite Nockensegment 25 die gleiche Anzahl von Nockenkonturen wie das erste Nockensegment 7.

Das zweite Nockensegment 25 ist derart mit der Tragwelle 3 verbunden, dass es einerseits drehfest zur Tragwelle 3 ist, aber andererseits axial verschiebbar auf der Tragwelle 3 angeordnet ist. Dies ist analog zur ersten Ausführungsform mit Hilfe von Einbuchtungen und Lagerkörpern realisiert. Alternativ kann auch die mit Bezug auf Figur 11 erläuterte Verzahnung verwendet werden.

Das erste Nockensegment 7 und das zweite Nockensegment 25 weisen eine gemeinsame Kontaktfläche auf 65 auf, die senkrecht zur Drehachse der Tragwelle 3 verläuft, so dass das erste Nockensegment 7 relativ zum zweiten Nockensegment 25 verdrehbar ist, ohne dass beim Verdrehen eine Verschiebung des ersten Nockensegmentes 7 oder des zweiten Nockensegmentes 25 verursacht wird. Analog zur zweiten Ausführungsform ist zwischen dem ersten Nockensegment 7 und dem zweiten Nockensegment 25 keine Kupplung vorgesehen.

Im vorliegenden Fall ist jeder Nockenkontur des ersten Nockensegmentes 7 eine Nockenkontur des zweiten Nockensegmentes 25 und eine zugehörige gemeinsame Axialposition von erstem Nockensegment 7 und zweiten Nockensegment 25 zugeordnet. Bei der gemeinsamen Axialposition sind die beiden Nockensegmente 7 und 25 auf Anschlag zusammengeschoben, so dass sie sich in der Kontaktfläche 65 berühren. Um beide Nockensegmente 7 und 25 an der gemeinsamen Axialposition zu fixieren, ist ein Rastmittel 35b vorgesehen, das das zweite Nockensegment 25 an einer der gemeinsamen Axialpositionen verrastet. Das erste Nockensegment 7 ist durch ein Federelement 95 gegen das zweite Nockensegment 25 verspannt. Die Axialposition des ersten Nockensegmentes 7 wird somit fixiert, indem das erste Nockensegment 7 durch die Rückstellkraft des Federelementes 95 gegen das zweite Nockensegment 25 gedrückt wird, wobei das zweite Nockensegment 25 über das Rastmittel 35b fixiert ist. Das Federelement 95 stützt sich hierbei am Stützelement 93 ab, das drehbar mit der Tragwelle 3 und drehfest mit der Innenwelle 5 verbunden ist. Die drehfeste Verbindung mit der Innenwelle 5 wird dadurch realisiert, dass die Innenwelle 5 eine Bohrung 97 mit einem Stift 99 aufweist, der durch eine Öffnung 101 in der Tragwelle 3 reicht und in eine Ausnehmung 103 des Stützelementes 93 eingreift.

Das Rastmittel 35b umfasst eine Bohrung 36b in der Innenwelle 5 mit zwei federbelasteten Rastkörpern 37b. In radialer Richtung sind die Rastkörper 37b beweglich gelagert. Diese radiale Bewegung der Rastköpers 37b erfolgt unter Zusammendrücken der Feder 39b. Die federbelasteten Rastkörper 37b reichen durch zwei Rastöffnungen 41b in der Tragwelle 3 und greifen in eine Rastnut 45b in der Innenseite der zweiten Ausnehmung 27 des zweiten Nockensegmentes 25 ein. Verschiebt man das zweite Nockensegment 25 zum zweiten Betriebsmodus hin (dh. nach rechts), so wird die Feder 39b zunächst zusammengedrückt, um die Verschiebung zu ermöglichen. An der zugeordneten gemeinsamen Axialposition bringt die Feder 39b dann die Rastkörper 37b mit der anderen Rastnut 46b in Eingriff und fixiert so die Axialposition des zweiten Nockensegmentes 25. Gleichzeitig verschiebt das zweite Nockensegment 25 das erste Nockensegment 7 gegen die Rückstellkraft des Federelementes 95 in Richtung des Stützelementes 93. Durch das Fixieren der Axialposition des zweiten Nockenelementes mit Hilfe des Rastmittels 25 wird somit auch die Axialposition des ersten Nockenelementes 7 fixiert. Verschiebt man das zweite Nockensegment 25 wieder zurück zum ersten Betriebsmodus hin (dh. nach links), so entspannt das Federelement 95 zumindest teilweise und verschiebt dabei das erste Nockensegment ebenfalls auf die zugeordnete Axialposition des ersten Betriebsmodus. Es ist ebenfalls möglich, dass das Federelement 95 im ersten Betriebsmodus vollständig entspannt ist und die Fixierung des ersten Nockensegmentes 7 im ersten Betriebsmodus lediglich durch Formschluss erfolgt, ohne dass das Federelement 95 eine wesentliche Kraft auf das erste Nockensegment ausübt.

Auch wenn in dieser Ausführungsform keine Kupplung zwischen den beiden Nockensegmenten 7 und 25 etabliert ist, sind beide Nockensegmente 7 und 25 dennoch aufgrund des Federelementes 95 nur gemeinschaftlich verschiebbar. In Figur 27 ist das Federelement 95 schematisch als eine Schraubenfeder dargestellt. Vorzugsweise ist das Federelement 95 als eine ringförmige Tellerfeder oder Membranfeder ausgebildet, die zwischen dem Stützelement 93 und dem zweiten Nockensegment 7 auf der Tragwelle 3 angeordnet ist.

Zur Verschiebung des zweiten Nockensegmentes 25 weist das zweite Nockensegment eine erste Kulissenbahn 53 und eine zweite Kulissenbahn 55 auf. Die Funktionsweise der Kulissenbahnen ist mit Bezug auf Figur 6 und 6a erläutert.

Sowohl die Rastöffnung 41b als auch die zwei Rastnuten 45b und 46b haben jeweils eine Ausdehnung in Umfangsrichtung, die größer ist als die Ausdehnung des Rastkörpers 37b in Umfangsrichtung, so dass der Rastkörper 37b eine Verdrehung der Innenwelle 5 relativ zur Tragwelle 3 nicht behindert. Die Rastnuten 45b und 46b sind in diesem Fall vollständig umlaufend ausgeführt. Dies ermöglicht dann ein einfacheres Herstellungsverfahren. Entsprechend weist die Öffnung 101 eine Ausdehnung in Umfangsrichtung auf, die größer ist als die Ausdehnung des Stiftes 99 in Umfangsrichtung, so dass der Stift 99 eine Verdrehung der Innenwelle 5 relativ zur Tragwelle 3 nicht behindert.

Bei einer Verdrehung der Innenwelle 5 zur Tragwelle 3 wird sowohl das erste Nockensegment 7 als auch das Stützelement 93 relativ zur Tragwelle verdreht, da beide drehfest mit der Innenwelle 5 verbunden sind. Somit bleibt die radiale Relativposition von ersten Nockensegment 7 und Stützelement 93 bei Verdrehung der Innenwelle 5 zur Tragwelle 3 erhalten. Somit kommt es zu keiner Bewegung zwischen dem Federelement 95 und dem ersten Nockensegment 7 beziehungsweise zwischen dem Federelement 95 und dem Stützelement 93. Es tritt demnach keine Reibung auf, die durch einen größeren Kraftaufwand bei der Verdrehung der Innenwelle 5 zur Tragwelle 3 überwunden werden müsste. Alternativ kann das Stützelement 93 auch drehfest mit der Tragwelle 5 verbunden sein. In diesem Fall ist dann ein Gleitlager zwischen dem Federelement 95 und dem ersten Nockensegment 7 beziehungsweise zwischen dem Federelement 95 und dem Stützelement 93 angeordnet. Durch das Gleitlager wird erreicht, dass eine Drehung des zweiten Nockensegmentes relativ zum Stützelement 93 nicht durch das verbindende Federelement 95 behindert wird.

Bei der in Figur 27 dargestellten Ausführungsform wird die axiale Verschiebung und die Verrastung der beiden Nockensegmente 25 und 7 erreicht, indem das zweite Nockensegment 25 mittels der Kulissenbahnen 53 und 55 bewegt wird und mitttels des Rastmittels 35b verrastet wird. Das erste Nockensegment 7 folgt lediglich der axialen Bewegung des zweiten Nockensegments 25. Analog kann auch der umgekehrte Aufbau realisiert sein, so dass Rastmittel und Kulissenbahnen am ersten Nockensegment 7 angeordnet sind und stattdessen das zweite Nockensegment 25 durch ein Federelement gegen das erste Nockensegment verspannt ist. Bei dieser Variante folgt dann das zweite Nockensegment der Verschiebung des ersten Nockensegmentes. Auch bei dieser Variante ist auf analoge Weise entweder möglich das Stützelement drehfest mit der Innenwelle oder drehfest mit der Tragwelle zu verbinden.

## Patentansprüche

1. Nockenwelle (1) umfassend eine als Hohlwelle ausgebildete Tragwelle, in deren Innerem eine Innenwelle (5) konzentrisch zur Tragwelle (3) angeordnet ist, wobei die Innenwelle (5) relativ zur Tragwelle (3) verdrehbar ist und auf der Tragwelle (3) ein erstes Nockensegment (7) mit einer ersten Ausnehmung (9) zur Aufnahme der Tragwelle (3) angeordnet ist, das bezüglich der Tragwelle (3) drehbar ist und über eine erste Öffnung (11) in der Tragwelle (3) drehfest mit der Innenwelle (5) verbunden ist, wobei das erste Nockensegment (7) mindestens zwei Nockenkonturen (13, 15) aufweist,
**dadurch gekennzeichnet, dass**
die Verbindung zwischen der Innenwelle (5) und dem ersten Nockensegment (7) derart gestaltet ist, dass das erste Nockensegment (7) relativ zur Innenwelle (5) und zur Tragwelle (3) axial verschiebbar ist und die Innenwelle (5) eine Bohrung (21) mit einem Stift (17) aufweist, der durch die erste Öffnung (11) in der Tragwelle (3) reicht und in eine axiale Nut (23) in der Innenseite der ersten Ausnehmung (9) des ersten Nockensegmentes (7) eingreift.

2. Nockenwelle (1) nach Anspruch 1,
**dadurch gekennzeichnet, dass**
die axiale Nut (23) auf der Innenseite der ersten Ausnehmung (9) bei der Verschiebung des ersten Nockensegmentes (7) über den Stift geführt wird.

3. Nockenwelle (1) nach einem der Ansprüche 1-2
**dadurch gekennzeichnet, dass**
benachbart zum ersten Nockensegment (7) auf der Tragwelle (3) ein zweites Nockensegment mit einer zweiten Ausnehmung (27) zur Aufnahme der Tragwelle (3) angeordnet ist, wobei das zweite Nockensegment (25) mindestens zwei Nockenkonturen (29, 31) aufweist und wobei die Verbindung zwischen dem zweiten Nockensegment (25) und der Tragwelle (3) derart gestaltet ist, dass das zweite Nockensegment (25) drehfest und axial verschiebbar auf der Tragwelle (3) angeordnet ist.

4. Nockenwelle (1) nach Anspruch 3,
**dadurch gekennzeichnet, dass**
die Innenseite der zweiten Ausnehmung (27) des zweiten Nockensegmentes (25) und die Außenseite der Tragwelle (3) sich gegenüberliegenden Einbuchtungen (47, 49) aufweisen, so dass sich Hohlräume ergeben, in denen Lagerkörper (51) angeordnet sind.

5. Nockenwelle (1) nach Anspruch 4,
**dadurch gekennzeichnet, dass**
die Einbuchtungen (47) auf der Innenseite der zweiten Ausnehmung (27) oder die Einbuchtungen (49) auf der Außenseite der Tragwelle (3) in axialer Richtung eine größere Ausdehnung aufweisen als die Lagerkörper (51), um eine axiale Verschiebung des zweiten Nockensegmentes (25) auf der Tragwelle (3) zu ermöglichen.

6. Nockenwelle (1) nach einem der Ansprüche 4-5,
**dadurch gekennzeichnet, dass**
die Einbuchtungen (47) auf der Innenseite der zweiten Ausnehmung und die Einbuchtungen (49) auf der Außenseite der Tragwelle (3) in Umfangsrichtung eine Ausdehnung aufweisen, die im wesentlichen der Ausdehnung der Lagerkörper (51) in diese Richtung entspricht, um eine Verdrehung des zweiten Nockensegmentes (25) relativ zur Tragwelle (3) zu verhindern.

7. Nockenwelle (1) nach Anspruch 3,
**dadurch gekennzeichnet, dass**
auf der Innenseite der zweiten Ausnehmung (27) und auf der Außenseite der Tragwelle (3) ineinandergreifende Verzahnungen (69) angeordnet sind, deren Zahnrillen sich in axialer Richtung erstrecken, so dass eine axiale Verschiebung des zweiten Nockensegmentes (25) auf der Tragwelle (3) ermöglicht wird und eine Verdrehung des zweiten Nockenelementes relativ zur Tragwelle (3) verhindert wird.

8. Nockenwelle (1) nach einem der Ansprüche 3-7,
**dadurch gekennzeichnet, dass**
das erste Nockensegment (7) und das zweite Nockensegment (25) benachbart auf der Tragwelle (3) angeordnet sind und zwischen dem ersten Nockensegment (7) und dem zweiten Nockensegment (25) eine Kupplung (33) derart etabliert ist, dass das erste Nockensegment (7) relativ zum zweiten Nockensegment (25) verdrehbar ist und beide Nockensegmente (7, 25) in axialer Richtung nur gemeinschaftlich verschiebbar sind.

9. Nockenwelle (1) einem der Ansprüche 3-7,
**dadurch gekennzeichnet, dass**
das erste Nockensegment (7) und das zweite Nockensegment (25) benachbart auf der Tragwelle (3) angeordnet sind und beide Nockensegmente (7, 25) eine gemeinsame Kontaktfläche (65) aufweisen, die senkrecht zur Drehachse der Tragwelle (3) verläuft, so dass das erste Nockensegment (7) relativ zum zweiten Nockensegment (25) verdrehbar ist, ohne dass beim Verdrehen eine Verschiebung eines der beiden Nockensegmente (7, 25) verursacht wird.

10. Nockenwelle nach Anspruch 9,
**dadurch gekennzeichnet, dass**
das erste Nockensegment (7) durch ein Federelement (95) gegen das zweite Nockensegment (25) verspannt ist oder das zweite Nockensegment durch ein Federelement (95) gegen das erste Nockensegment verspannt ist.

11. Nockenwelle (1) nach einem der Ansprüche 3-10 ,
**dadurch gekennzeichnet, dass**
das erste Nockensegment (7) und das zweite Nockensegment (25) zusammen mindestens eine erste Kulissenbahn (53) zum Bewegen des ersten Nockensegmentes (7) und des zweiten Nockensegmentes (25) in eine erste axiale Richtung (57) und eine zweite Kulissenbahn (55) zum Bewegen des ersten Nockensegmentes (7) und des zweiten Nockensegmentes (25) in eine zweite axiale Richtung (59) aufweisen, wobei die zweite axiale Richtung (59) zur ersten axialen Richtung (57) entgegengesetzt ist.

12. Nockenwelle (1) nach Anspruch 11,
**dadurch gekennzeichnet, dass**
die erste Kulissenbahn (53) und die zweite Kulissenbahn (55) am zweiten Nockensegment (25) angeordnet sind.

13. Nockenwelle (1) nach Anspruch 3-10,
**dadurch gekennzeichnet, dass**
das erste Nockensegment (7) eine erste Kulissenbahn (53) zum Bewegen des ersten Nockensegmentes (7) in eine erste axiale Richtung (57) auf das zweite Nockensegment (25) hin aufweist und das zweite Nockensegment (25) eine zweite Kulissenbahn (55) zum Bewegen des zweiten Nockensegmentes (25) in eine zweite axiale Richtung (59) auf das erste Nockensegment (7) hin aufweist.

14. Nockenwelle (1) nach einem der Ansprüche 3 -13,
**dadurch gekennzeichnet, dass**
jeder Nockenkontur (13, 15) des ersten Nockensegmentes (7) eine zugehörige Nockenkontur (29, 31) des zweiten Nockensegmentes (25) und eine zugehörige gemeinsame Axialposition von erstem Nockensegment (7) und zweitem Nockensegment (25) zugeordnet ist.

15. Nockenwelle (1) nach Anspruch 14,
**dadurch gekennzeichnet, dass**
die Nockenwelle (1) ein Rastmittel (35) umfasst, das das erste Nockensegment (7) an einer der gemeinsamen Axialpositionen verrastet.

16. Nockenwelle (1) nach einem der Ansprüche 13 -15,
**dadurch gekennzeichnet, dass**
die Nockenwelle (1) ein Rastmittel (35) umfasst, das das zweite Nockensegment (25) an einer der gemeinsamen Axialpositionen verrastet.

## Claims

1. Camshaft (1) comprising a support shaft formed as a hollow shaft, in the interior of which an inner shaft (5) is arranged concentrically in relation to the support shaft (3), wherein the inner shaft (5) is rotatable relative to the support shaft (3) and there is arranged on the support shaft (3) a first cam segment (7) with a first recess (9) for receiving the support shaft (3), which cam segment (7) is rotatable with respect to the support shaft (3) and is connected in a rotationally conjoint manner to the inner shaft (5) via a first opening (11) in the support shaft (3), wherein
the first cam segment (7) has at least two cam contours (13, 15),
**characterized in that**
the connection between the inner shaft (5) and the first cam segment (7) is configured such that the first cam segment (7) is axially displaceable relative to the inner shaft (5) and to the support shaft (3) and
the inner shaft (5) has a bore (21) with a pin (17) which reaches through the first opening (11) in the support shaft (3) and engages in an axial groove (23) in the inner side of the first recess (9) of the first cam segment (7).

2. Camshaft (1) according to Claim 1,
**characterized in that**
the axial groove (23) is guided on the inner side of the first recess (9) during displacement of the first cam segment (7) via the pin.

3. Camshaft (1) according to any one of Claims 1-2,
**characterized in that**
adjacent to the first cam segment (7), a second cam segment with a second recess (27) for receiving the support shaft (3) is arranged on the support shaft (3), wherein the second cam segment (25) has at least two cam contours (29, 31) and wherein the connection between the second cam segment (25) and the support shaft (3) is configured such that the second cam segment (25) is arranged in a rotationally conjoint manner and axially displaceably on the support shaft (3).

4. Camshaft (1) according to Claim 3,
**characterized in that**
the inner side of the second recess (27) of the second cam segment (25) and the outer side of the support shaft (3) have opposing indentations (47, 49) so that cavities are produced in which bearing bodies (51) are arranged.

5. Camshaft (1) according to Claim 4,
**characterized in that**
the indentations (47) on the inner side of the second recess (27) or the indentations (49) on the outer side of the support shaft (3) have a greater extent in the axial direction than the bearing bodies (51) in order to enable an axial displacement of the second cam segment (25) on the support shaft (3).

6. Camshaft (1) according to any one of Claims 4-5,
**characterized in that**
the indentations (47) on the inner side of the second recess and the indentations (49) on the outer side of the support shaft (3) have an extent in the circumferential direction which corresponds substantially to the extent of the bearing bodies (51) in this direction in order to prevent a rotation of the second cam segment (25) relative to the support shaft (3).

7. Camshaft (1) according to Claim 3,
**characterized in that**
toothings (69) which engage in one another are arranged on the inner side of the second recess (27) and on the outer side of the support shaft (3), the tooth grooves of which toothings (69) extend in the axial direction so that an axial displacement of the second cam segment (25) on the support shaft (3) is enabled and a rotation of the second cam element relative to the support shaft (3) is prevented.

8. Camshaft (1) according to any one of Claims 3-7,
**characterized in that**
the first cam segment (7) and the second cam segment (25) are arranged adjacently on the support shaft (3) and a coupling (33) is established between the first cam segment (7) and the second cam segment (25) such that the first cam segment (7) is rotatable relative to the second cam segment (25) and both cam segments (7, 25) are only jointly displaceable in the axial direction.

9. Camshaft (1) according to any one of Claims 3-7,
**characterized in that**
the first cam segment (7) and the second cam segment (25) are arranged adjacently on the support shaft (3) and both cam segments (7, 25) have a joint contact surface (65) which runs perpendicular to the axis of rotation of the support shaft (3) so that the first cam segment (7) is rotatable relative to the second cam segment (25) without a displacement of one of the two cam segments (7, 25) being brought about during rotation.

10. Camshaft (1) according to Claim 9,
**characterized in that**
the first cam segment (7) is tensioned by a spring element (95) against the second cam segment (25) or the second cam segment is tensioned by a spring element (95) against the first cam segment.

11. Camshaft (1) according to any one of Claims 3-10,
**characterized in that**
the first cam segment (7) and the second cam segment (25) jointly have at least one first slide track (53) for movement of the first cam segment (7) and of the second cam segment (25) in a first axial direction (57) and a second slide track (55) for movement of the first cam segment (7) and of the second cam segment (25) in a second axial direction (59), wherein the second axial direction (59) is opposite to the first axial direction (57) .

12. Camshaft (1) according to Claim 11,
**characterized in that**
the first slide track (53) and the second slide track (55) are arranged on the second cam segment (25) .

13. Camshaft (1) according to Claim 3-10,
**characterized in that**
the first cam segment (7) has a first slide track (53) for movement of the first cam segment (7) in a first axial direction (57) towards the second cam segment (25) and the second cam segment (25) has a second slide track (55) for movement of the second cam segment (25) in a second axial direction (59) towards the first cam segment (7).

14. Camshaft (1) according to any one of Claims 3-13,
**characterized in that**
each cam contour (13, 15) of the first cam segment (7) is assigned an associated cam contour (29, 31) of the second cam segment (25) and an associated joint axial position of first cam segment (7) and second cam segment (25).

15. Camshaft (1) according to Claim 14,
**characterized in that**
the camshaft (1) comprises a latching means (35) which latches the first cam segment (7) at one of the joint axial positions.

16. Camshaft (1) according to any one of Claims 13-15,
**characterized in that**
the camshaft (1) comprises a latching means (35) which latches the second cam segment (25) at one of the joint axial positions.

## Revendications

1. Arbre à cames (1), comprenant un arbre porteur réalisé sous forme d'arbre creux à l'intérieur duquel est disposé un arbre intérieur (5) concentriquement à l'arbre porteur (3), l'arbre intérieur (5) pouvant tourner par rapport à l'arbre porteur (3), et un premier segment de came (7) avec un premier évidement (9) pour recevoir l'arbre porteur (3) étant disposé sur l'arbre porteur (3), lequel peut tourner par rapport à l'arbre porteur (3) et est connecté de manière solidaire en rotation à l'arbre intérieur (5) par le biais d'une première ouverture (11) dans l'arbre porteur (3), le premier segment de came (7) présentant au moins deux contours de came (13, 15),
**caractérisé en ce que**
la connexion entre l'arbre intérieur (5) et le premier segment de came (7) est réalisée de telle sorte que le premier segment de came (7) puisse être déplacé axialement par rapport à l'arbre intérieur (5) et par rapport à l'arbre porteur (3) et l'arbre intérieur (5) présente un alésage (21) avec une goupille (17) qui s'étend à travers la première ouverture (11) dans l'arbre porteur (3) et qui s'engage dans une rainure axiale (23) dans le côté intérieur du premier évidement (9) du premier segment de came (7).

2. Arbre à cames (1) selon la revendication 1,
**caractérisé en ce que** la rainure axiale (23) est guidée par le biais de la goupille sur le côté intérieur du premier évidement (9) lors du déplacement du premier segment de cadre (7).

3. Arbre à cames (1) selon l'une quelconque des revendications 1 et 2,
**caractérisé en ce**
**qu'**un deuxième segment de came avec un deuxième évidement (27) pour recevoir l'arbre porteur (3) est disposé à côté du premier segment de came (7) sur l'arbre porteur (3), le deuxième segment de came (25) présentant au moins deux contours de came (29, 31), et la connexion entre le deuxième segment de came (25) et l'arbre porteur (3) étant réalisée de telle sorte que le deuxième segment de came (25) soit disposé de manière solidaire en rotation et déplaçable axialement sur l'arbre porteur (3).

4. Arbre à cames (1) selon la revendication 3,
**caractérisé en ce que**
le côté intérieur du deuxième évidement (27) du deuxième segment de came (25) et le côté extérieur de l'arbre porteur (3) présentent des renfoncements opposés l'un à l'autre (47, 49), de telle sorte que l'on obtienne des cavités dans lesquelles sont disposés des corps de palier (51).

5. Arbre à cames (1) selon la revendication 4,
**caractérisé en ce que**
les renfoncements (47) sur le côté intérieur du deuxième évidement (27) ou les renfoncements (49) sur le côté extérieur de l'arbre porteur (3) présentent, dans la direction axiale, une plus grande étendue que les corps de palier (51) afin de permettre un déplacement axial du deuxième segment de came (25) sur l'arbre porteur (3).

6. Arbre à cames (1) selon l'une quelconque des revendications 4 à 5,
**caractérisé en ce que**
les renfoncements (47) sur le côté intérieur du deuxième évidement et les renfoncements (49) sur le côté extérieur de l'arbre porteur (3) présentent, dans la direction périphérique, une étendue qui correspond essentiellement à l'étendue des corps de palier (51) dans cette direction, afin d'empêcher une rotation du deuxième segment de came (25) par rapport à l'arbre porteur (3).

7. Arbre à cames (1) selon la revendication 3,
**caractérisé en ce que**
sur le côté intérieur du deuxième évidement (27) et sur le côté extérieur de l'arbre porteur (3) sont disposés des dentures s'engageant les unes dans les autres (69), dont les rainures de denture s'étendent dans la direction axiale de telle sorte qu'un déplacement axial du deuxième segment de came (25) sur l'arbre porteur (3) soit possible et qu'une rotation du deuxième élément de came par rapport à l'arbre porteur (3) soit empêchée.

8. Arbre à cames (1) selon l'une quelconque des revendications 3 à 7,
**caractérisé en ce que**
le premier segment de came (7) et le deuxième segment de came (25) sont disposés de manière adjacente sur l'arbre porteur (3) et un accouplement (33) est établi entre le premier segment de came (7) et le deuxième segment de came (25) de telle sorte que le premier segment de came (7) puisse être tourné par rapport au deuxième segment de came (25) et que les deux segments de came (7, 25) puissent être déplacés dans la direction axiale seulement en commun.

9. Arbre à cames (1) selon l'une quelconque des revendications 3 à 7,
**caractérisé en ce que**
le premier segment de came (7) et le deuxième segment de came (25) sont disposés de manière adjacente sur l'arbre porteur (3) et les deux segments de came (7, 25) présentent une surface de contact commune (65) qui s'étend perpendiculairement à l'axe de rotation de l'arbre porteur (3), de telle sorte que le premier segment de came (7) puisse tourner par rapport au deuxième segment de came (25) sans causer un déplacement de l'un des deux segments de came (7, 25) lors de la rotation.

10. Arbre à cames selon la revendication 9,
**caractérisé en ce que** le premier segment de came (7) est serré par un élément de ressort (95) contre le deuxième segment de came (25) ou le deuxième segment de came est serré contre le premier segment de came par un élément de ressort (95) .

11. Arbre à cames (1) selon l'une quelconque des revendications 3 à 10,
**caractérisé en ce que**
le premier segment de came (7) et le deuxième segment de came (25) présentent ensemble au moins une première voie de coulissement (53) pour le déplacement du premier segment de came (7) et du deuxième segment de came (25) dans une première direction axiale (57) et une deuxième voie de coulissement (55) pour le déplacement du premier segment de came (7) et du deuxième segment de came (25) dans une deuxième direction axiale (59), la deuxième direction axiale (59) étant opposée à la première direction axiale (57).

12. Arbre à cames (1) selon la revendication 11,
**caractérisé en ce que**
la première voie de coulissement (53) et la deuxième voie de coulissement (55) sont disposées sur le deuxième segment de came (25).

13. Arbre à cames (1) selon la revendication 3 à 10,
**caractérisé en ce que**
le premier segment de came (7) présente une première voie de coulissement (53) pour le déplacement du premier segment de came (7) dans une première direction axiale (57) sur le deuxième segment de came (25) et le deuxième segment de came (25) présente une deuxième voie de coulissement (55) pour le déplacement du deuxième segment de came (25) dans une deuxième direction axiale (59) sur le premier segment de came (7).

14. Arbre à cames (1) selon l'une quelconque des revendications 3 à 13,
**caractérisé en ce**
**qu'**à chaque contour de came (13, 15) du premier segment de came (7) est associé un contour de came associé (29, 31) du deuxième segment de came (25) et une position axiale commune associée du premier segment de came (7) et du deuxième segment de came (25) .

15. Arbre à cames (1) selon la revendication 14,
**caractérisé en ce que**
l'arbre à cames (1) comprend un moyen d'encliquetage (35) qui encliquète le premier segment de came (7) sur l'une des positions axiales communes.

16. Arbre à cames (1) selon l'une quelconque des revendications 13 à 15,
**caractérisé en ce que**
l'arbre à cames (1) comprend un moyen d'encliquetage (35) qui encliquète le deuxième segment de came (25) sur l'une des positions axiales communes.
